# EUROPEAN PATENT APPLICATION

(11) **EP 4 801 201 A1**
(43) Date of publication of application: **02.09.2026**
(21) Application number: 24882638.0
(22) Date of filing: 06.09.2024
(51) Int. Cl.: H05H 3/06, H05H 6/00, G21G 4/02

(54) **NEUTRON-GENERATING DEVICE AND NEUTRON-INDUCED GAMMA-RAY MEASUREMENT SYSTEM INCLUDING SAME**

(30) Priority: 26.10.2023 KR 20230144895
(71) Applicant: Q-Beam Solution Inc., Daejeon 34368 (KR)
(72) Inventor: NOH, Dong Ju, Seoul 06994 (KR)
(74) Representative: Isarpatent
(86) International application number: PCT/KR2024/013516
(87) International publication number: WO 2025/089609

(57) **Abstract**

A neutron generating device is disclosed. A neutron generating device according to an embodiment of the present disclosure may comprise a plasma generation unit forming a plasma and extracting an ion beam; a neutron chamber which is coupled to a rear end of the plasma generation unit and receives the ion beam from the plasma generation unit; and a target unit coupled to the neutron chamber, the ion beam being incident on the target unit in a longitudinal direction. The target unit may include a target flange coupled to the neutron chamber; a target body that extends from the target flange and is elongated in a transverse direction; and a target electrode that is coupled to the target body and faces the plasma generation unit.

## Description

### [Technical Field]

The present disclosure relates to a neutron generating device and a neutron-induced gamma ray measurement system including the same.

### [Background Art]

When a neutron transfers energy to an atomic nucleus, the atomic nucleus is excited and then returns to a ground state, which may generate gamma rays. The generated gamma rays may vary depending on a type of element. Using this characteristic, a type and an amount of element in a sample may be measured.

Neutrons may be generated when radioactive isotopes undergo nuclear decay. When the neutrons are used from the radioactive isotopes, periodic replacement is required, and the density of a neutron beam may not be constant.

(Patent Document 1) KR 10-1574203 B1

### [Disclosure]

### [Technical Problem]

An object of the present disclosure is to address the above-described and other problems.

Another object of the present disclosure is to provide a neutron generating device with line source characteristics.

Another object of the present disclosure is to provide a neutron generating device with multi-source characteristics.

Another object of the present disclosure is to provide a neutron-induced gamma ray measurement system that irradiates neutrons from the inside to the outside of a test subject.

Another object of the present disclosure is to provide a neutron-induced gamma ray measurement system that transports a test subject and measures gamma rays.

Another object of the present disclosure is to provide a neutron-induced gamma ray measurement system that recycles a nuclear fusion reaction material.

### [Technical Solution]

According to an aspect of the present disclosure, there may be provided a neutron generating device comprising a plasma generation unit forming a plasma and extracting an ion beam; a neutron chamber which is coupled to a rear end of the plasma generation unit and receives the ion beam from the plasma generation unit; and a target unit coupled to the neutron chamber, the ion beam being incident on the target unit in a longitudinal direction, and the target unit may include a target flange coupled to the neutron chamber; a target body that extends from the target flange and is elongated in a transverse direction; and a target electrode that is coupled to the target body and faces the plasma generation unit.

According to an aspect of the present disclosure, there may be provided a neutron generating device comprising a plasma generation unit forming a plasma and extracting an ion beam; a neutron chamber which is coupled to a rear end of the plasma generation unit and receives the ion beam from the plasma generation unit; and a target unit coupled to the neutron chamber, the ion beam being incident on the target unit in a longitudinal direction, and the target unit may include a target flange coupled to the neutron chamber; a target body that extends from the target flange and is elongated in the longitudinal direction; and a target electrode that is coupled to the target body and faces the plasma generation unit, and the target body may form a step in the longitudinal direction.

According to an aspect of the present disclosure, there may be provided a neutron-induced gamma ray measurement system comprising an object feeder including a feeder cabinet forming a hollow portion which is open upward and downward, and providing an object to the feeder cabinet; a neutron generating device located in the hollow portion of the feeder cabinet and generating neutrons; and a measuring device including a gamma ray measuring unit arranged outside the feeder cabinet.

According to an aspect of the present disclosure, there may be provided a neutron-induced gamma ray measurement system comprising a neutron generating device generating neutrons; an object feeder including a feeder pipe that faces the neutron generating device, is elongated in a left-right direction, and accommodates an object; and a measuring device including a gamma ray measuring unit arranged outside the feeder pipe, and the feeder pipe may include an inner pipe panel that faces the neutron generating device and is concave toward the neutron generating device; an outer pipe panel that faces the inner pipe panel and is concave toward the inner pipe panel; and a side pipe panel connecting the outer pipe panel and the inner pipe panel.

According to an aspect of the present disclosure, there may be provided a neutron-induced gamma ray measurement system comprising an object feeder accommodating an object; a neutron generating device generating neutrons and providing the neutrons to the object feeder; a measuring device including a gamma ray measuring unit arranged adjacent to the object feeder; a gas feeder providing a plasma material gas to the neutron generating device; and a circulation device including a vacuum pump that is connected to the neutron generating device and sucks a byproduct gas located in the neutron generating device, and the circulation device may further comprise an extractor that extracts a nuclear fusion reaction material required for a nuclear fusion reaction from the byproduct gas, and may provide the nuclear fusion reaction material to the gas feeder, and the nuclear fusion reaction material may be provided to the gas feeder.

### [Advantageous Effects]

According to at least one embodiment of the present disclosure, a neutron generating device with line source characteristics can be provided.

According to at least one embodiment of the present disclosure, a neutron generating device with multi-source characteristics can be provided.

According to at least one embodiment of the present disclosure, a neutron-induced gamma ray measurement system that irradiates neutrons from the inside to the outside of a test subject can be provided.

According to at least one embodiment of the present disclosure, a neutron-induced gamma ray measurement system that transports a test subject and measures gamma rays can be provided.

According to at least one embodiment of the present disclosure, a neutron-induced gamma ray measurement system that recycles a nuclear fusion reaction material can be provided.

### [Description of Drawings]

FIG. 1 illustrates a support frame device according to an embodiment of the present disclosure.
FIG. 2 illustrates a plasma generation unit according to an embodiment of the present disclosure.
FIG. 3 is a cross-sectional view of a plasma generation unit illustrated in FIG. 2 taken along A1-A2.
FIG. 4 illustrates a plasma chamber of a plasma generation unit illustrated in FIG. 3.
FIG. 5 illustrates a plasma magnet module illustrated in FIG. 3.
FIG. 6 is a cross-sectional view of a plasma generation unit illustrated in FIG. 2 taken along A1-A2 and illustrates that a plasma magnet module is adjacent to a plasma anode.
FIGS. 7 and 8 are cross-sectional views of a plasma anode and a plasma magnet illustrated in FIG. 6 taken along B-B'.
FIG. 9 illustrates a neutron chamber according to an embodiment of the present disclosure.
FIG. 10 is a cross-sectional view of a neutron chamber illustrated in FIG. 9 taken along B1-B2.
FIG. 11 illustrates a target unit including a target body.
FIG. 12 is a cross-sectional view of a target unit illustrated in FIG. 11 taken along D1-D2.
FIG. 13 is an enlarged view of a target electrode illustrated in FIG. 12.
FIG. 14 illustrates a target unit including a target head.
FIG. 15 is a cross-sectional view of a target unit illustrated in FIG. 14 taken along E1-E2.
FIG. 16 illustrates a neutron generating device.
FIG. 17 illustrates a beam bender according to an embodiment of the present disclosure.
FIG. 18 is a cross-sectional view of a beam bender illustrated in FIG. 17 taken along F1-F2.
FIG. 19 illustrates a plasma chamber holder according to an embodiment of the present disclosure.
FIG. 20 illustrates that a plurality of plasma generation units is coupled to a plasma chamber holder.
FIG. 21 illustrates a neutron chamber coupled to a plasma chamber holder illustrated in FIG. 20.
FIG. 22 illustrates a target unit coupled to a neutron chamber illustrated in FIG. 21.
FIG. 23 illustrates a neutron chamber that is coupled to a plasma chamber holder illustrated in FIG. 20 and is directed toward a width direction of a neutron chamber mount port and a neutron generating device.
FIG. 24 is a cross-sectional view of a neutron chamber illustrated in FIG. 23 taken along G1-G2.
FIG. 25 is a cross-sectional view of a neutron chamber illustrated in FIG. 23 taken along H1-H2.
FIG. 26 illustrates a target unit that is coupled to a neutron chamber illustrated in FIG. 23 and includes a target electrode formed in an integrally elongated form.
FIG. 27 illustrates a target unit that is coupled to a neutron chamber illustrated in FIG. 23 and includes a plurality of target electrodes.
FIG. 28 illustrates a neutron-induced gamma ray measurement system according to an embodiment of the present disclosure.
FIG. 29 is a cross-sectional view of a neutron-induced gamma ray measurement system illustrated in FIG. 28.
FIG. 30 illustrates a feeder cabinet including an inner cabinet wall and a cabinet bottom.
FIG. 31 illustrates that an outer cabinet wall and a cabinet top are added to a feeder cabinet illustrated in FIG. 30.
FIG. 32 illustrates a neutron-induced gamma ray measurement system in which a neutron generating device is coupled to a feeder cabinet and a measuring device is arranged on the feeder cabinet.
FIG. 33 illustrates a target unit including a stepped target body.
FIG. 34 illustrates a neutron-induced gamma ray measurement system including a gas feeder and a circulation device.
FIG. 35 is a block diagram illustrating a neutron-induced gamma ray measurement system according to an embodiment of the present disclosure.

### [Mode for Invention]

Reference will now be made in detail to embodiments of the disclosure, examples of which are illustrated in the accompanying drawings. Wherever possible, the same reference numbers will be used throughout the drawings to refer to the same or like parts. In the following description, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing a component from another components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more other features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected with other layers, areas, and components intervening between them. For example, when layers, areas, components, etc. are electrically connected, the present disclosure includes both the case where layers, areas, and components are directly electrically connected, and the case where layers, areas, and components are indirectly electrically connected with other layers, areas, and components intervening between them.

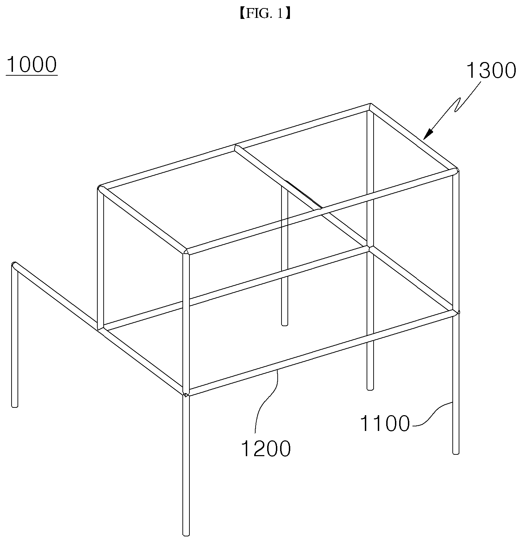

FIG. 1 illustrates a support frame device 1000 according to an embodiment of the present disclosure. Referring to FIG. 1, the support frame device 1000 may include a support frame pillar 1100. The support frame pillar 1100 may be extended or elongated vertically.

A plurality of support frame pillars 1100 may be provided. For example, the plurality of support frame pillars 1100 may be spaced apart from each other. The support frame pillar 1100 may be fixed to an external fixture. For example, the support frame pillar 1100 may be fixed to the ground.

The support frame device 1000 may include a support frame beam 1200. The support frame beam 1200 may be extended or elongated horizontally. A plurality of support frame beams 1200 may be provided. For example, the plurality of support frame beams 1200 may be spaced apart from each other.

The support frame beam 1200 may connect two support frame pillars 1100. For example, an end portion of the support frame beam 1200 may be connected to one of the two support frame pillars 1100, and another end portion of the support frame beam 1200 may be connected to the other of the two support frame pillars 1100.

The support frame device 1000 may include a support frame mount 1300. The support frame mount 1300 may include at least one support frame pillar 1100 and at least one support frame beam 1200.

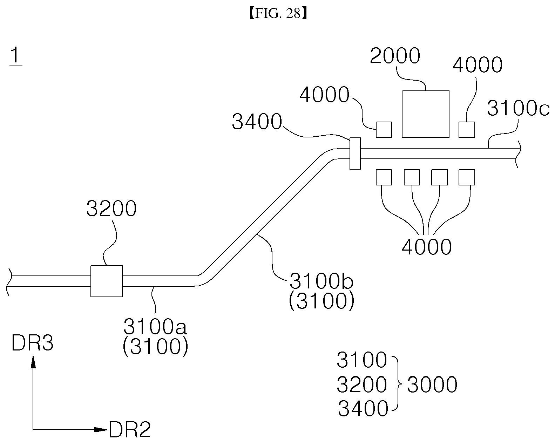

At least one of a neutron generating device 2000 (see FIG. 28), an object feeder 3000 (see FIG. 28), or a measuring device 4000 (see FIG. 28) may be coupled to, seated on, or connected to the support frame mount 1300.

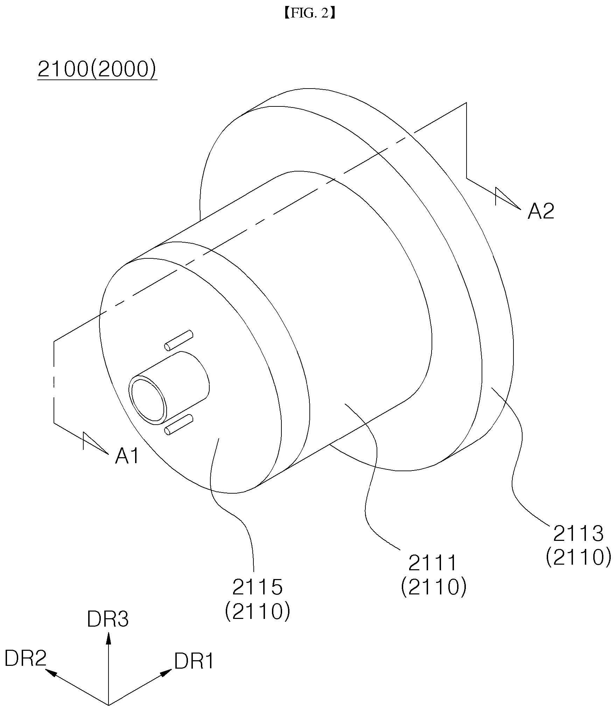

FIG. 2 illustrates a plasma generation unit according to an embodiment of the present disclosure.

A first direction DR1, a second direction DR2, and a third direction DR3 may be defined in the present disclosure. The first direction DR1, the second direction DR2, and the third direction DR3 may sequentially form a Cartesian coordinate system.

For example, the third direction DR3 may be an upward direction. A plane formed by the first direction DR1 and the second direction DR2 may be a horizontal plane. The third direction DR3 may be perpendicular to the horizontal plane.

The first direction DR1 and the second direction DR2 may be perpendicular to each other. For example, the first direction DR1 may be a rearward direction. That is, the first direction DR1 may be parallel to a front-rear direction. For example, the second direction DR2 may be a right direction.

The neutron generating device 2000 may include a plasma generation unit 2100. The plasma generation unit 2100 may include a plasma chamber 2110. The plasma chamber 2110 may include a plasma chamber body 2111.

The plasma chamber body 2111 may form a space therein. Plasma may be formed in the space formed inside the plasma chamber body 2111. The space formed inside the plasma chamber body 2111 may be open in the first direction DR1.

For example, the space formed inside the plasma chamber body 2111 may be open forward and rearward. An opening may be formed at each of a front end and a rear end of the plasma chamber body 2111. The space formed inside the plasma chamber body 2111 may be connected to or communicate with the opening formed at the front end of the plasma chamber body 2111 and the opening formed at the rear end of the plasma chamber body 2111.

The plasma chamber 2110 may include a plasma chamber flange 2113. The plasma chamber flange 2113 may be connected to or formed at the rear end of the plasma chamber body 2111. For example, the plasma chamber flange 2113 may extend from the rear end of the plasma chamber body 2111. The plasma chamber body 2111 and the plasma chamber flange 2113 may be arranged in the first direction DR1.

The plasma chamber flange 2113 may extend or protrude from the plasma chamber body 2111 in a radial direction of the plasma chamber body 2111. An axial direction of the plasma chamber body 2111 may be parallel to the first direction DR1. The plasma chamber flange 2113 may form a step with the plasma chamber body 2111.

The plasma chamber 2110 may include a plasma chamber lid 2115. The plasma chamber lid 2115 may be connected or coupled to the front end of the plasma chamber body 2111. The plasma chamber lid 2115 may block the opening formed at the front end of the plasma chamber body 2111.

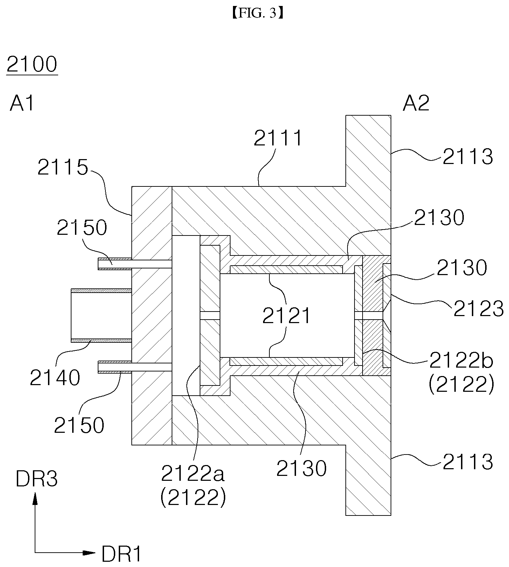

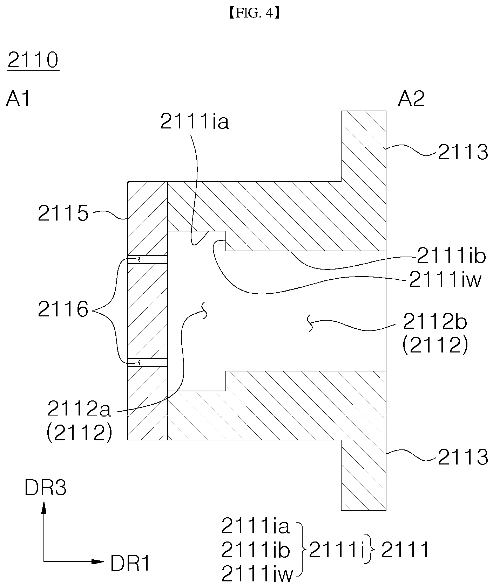

FIG. 3 is a cross-sectional view of a plasma generation unit illustrated in FIG. 2 taken along A1-A2. FIG. 4 illustrates a plasma chamber of a plasma generation unit illustrated in FIG. 3.

Referring to FIGS. 3 and 4, the plasma chamber 2110 may include a gas injection hole 2116. The gas injection hole 2116 may be formed in the plasma chamber lid 2115. Gas may be injected into the inside of the plasma chamber body 2111 through the gas injection hole 2116.

The gas injection hole 2116 may extend rearward from a front face of the plasma chamber lid 2115 and may be connected to a rear face of the plasma chamber lid 2115. In other words, the gas injection hole 2116 may penetrate the plasma chamber lid 2115 in the first direction DR1 or the front-rear direction.

A space may be formed inside the plasma chamber body 2111. For example, the plasma chamber 2110 may include a plasma chamber space 2112. The plasma chamber space 2112 may be divided into two parts.

For example, the plasma chamber space 2112 may include a first plasma chamber space 2112a and a second plasma chamber space 2112b. The first plasma chamber space 2112a and the second plasma chamber space 2112b may form a step.

For example, a step may be formed at a boundary between the first plasma chamber space 2112a and the second plasma chamber space 2112b. For example, a radial size of the first plasma chamber space 2112a may be greater than a radial size of the second plasma chamber space 2112b.

The first plasma chamber space 2112a and the second plasma chamber space 2112b may be connected or communicate with each other. The first plasma chamber space 2112a may be positioned in front of the second plasma chamber space 2112b.

The plasma chamber space 2112 may communicate with the outside. For example, the first plasma chamber space 2112a may be connected to an opening formed at the front end of the plasma chamber body 2111. For example, the second plasma chamber space 2112b may be connected to an opening formed at the rear end of the plasma chamber body 2111.

A pressure in the plasma chamber space 2112 may be lower than 1 atmosphere. The pressure in the plasma chamber space 2112 may vary depending on the location. For example, a pressure in the first plasma chamber space 2112a may be greater than a pressure in the second plasma chamber space 2112b and may be lower than 1 atmosphere.

The plasma chamber body 2111 may form an inner surface and an outer surface. For example, a plasma chamber body inner surface 2112i may form the plasma chamber space 2112. For example, the plasma chamber body inner surface 2112i may face the plasma chamber space 2112.

The plasma chamber body inner surface 2112i may include a first plasma chamber body inner surface 2112ia. The first plasma chamber body inner surface 2112ia may form or face the first plasma chamber space 2112a.

The plasma chamber body inner surface 2112i may include a second plasma chamber body inner surface 2112ib. The second plasma chamber body inner surface 2112ib may form or face the second plasma chamber space 2112b.

The plasma chamber body inner surface 2112i may include a plasma chamber body inner wall 2111iw. The plasma chamber body inner wall 2111iw may extend from a rear end of the first plasma chamber body inner surface 2112ia and may be connected to a front end of the second plasma chamber body inner surface 2112ib.

The plasma chamber body inner wall 2111iw may be directed forward or face forward. For example, the plasma chamber body inner wall 2111iw may be directed toward or face the plasma chamber lid 2115. The plasma chamber body inner wall 2111iw may form a step in the plasma chamber space 2112.

The plasma generation unit 2100 may include a plasma electrode 2120. The plasma electrode 2120 may be connected to or coupled to the plasma chamber body 2111. The plasma electrode 2120 may be accommodated in the plasma chamber 2110. For example, the plasma electrode 2120 may be positioned in the plasma chamber space 2112.

The plasma electrode 2120 may include a plasma anode 2121. The plasma anode 2121 may form a positive electric potential.

The plasma anode 2121 may face a second plasma chamber body inner surface 2111ib. The plasma anode 2121 may be positioned in the second plasma chamber space 2112b. The plasma anode 2121 may form the shape of a pipe. For example, a space formed inside the plasma anode 2121 may be open forward and rearward.

The plasma electrode 2120 may include a plasma cathode 2122. The plasma cathode 2122 may form a negative electric potential.

The plasma cathode 2122 may be divided into two parts. For example, the plasma cathode 2122 may include a first plasma cathode 2122a that is located in front of the plasma anode 2121 and is located in the first plasma chamber space 2112a. The first plasma cathode 2122a may form a boundary between the first plasma chamber space 2112a and the second plasma chamber space 2112b.

The first plasma cathode 2122a may form a hole. The first plasma chamber space 2112a and the second plasma chamber space 2112b may be connected to each other through the hole formed in the first plasma cathode 2122a.

For example, the plasma cathode 2122 may include a second plasma cathode 2122b that is located behind the plasma anode 2121 and is located in the second plasma chamber space 2112b. A radial size of the first plasma cathode 2122a may be greater than a radial size of the second plasma cathode 2122b.

The plasma electrode 2120 may include a plasma extraction electrode 2123. The plasma extraction electrode 2123 may be located behind the second plasma cathode 2122b. The plasma extraction electrode 2123 may be located in the second plasma chamber space 2112b. The plasma extraction electrode 2123 may be located at the rear end of the plasma chamber body 2111.

The second plasma cathode 2122b may form a hole. The plasma extraction electrode 2123 may form a hole. The hole formed in the plasma extraction electrode 2123 may be located behind the hole formed in the second plasma cathode 2122b.

The plasma generation unit 2100 may include a plasma chamber insulator 2130. The plasma chamber insulator 2130 may be formed of a material including an electrical insulating material.

The plasma chamber insulator 2130 may be located between the plasma electrode 2120 and the plasma chamber 2110. For example, the plasma chamber insulator 2130 may separate the plasma electrode 2120 and the plasma chamber 2110.

The plasma chamber insulator 2130 may be located between the plurality of plasma electrodes 2120 and may separate the plurality of plasma electrodes 2120. For example, the plasma chamber insulator 2130 may be located between the first plasma cathode 2122a and the plasma anode 2121. For example, the plasma chamber insulator 2130 may be located between the plasma anode 2121 and the second plasma cathode 2122b.

For example, the plasma chamber insulator 2130 may be located between the second plasma cathode 2122b and the plasma extraction electrode 2123. A hole may be formed in the plasma chamber insulator 2130 located between the second plasma cathode 2122b and the plasma extraction electrode 2123.

The hole formed in the plasma chamber insulator 2130 located between the second plasma cathode 2122b and the plasma extraction electrode 2123 may be located between the hole formed in the second plasma cathode 2122b and the hole formed in the plasma extraction electrode 2123.

An electric field may be formed between the plasma anode 2121 and the plasma cathode 2122. For example, the electric field may extend from the plasma anode 2121 and lead to the plasma cathode 2122. A direction of the electric field may be a direction from the plasma anode 2121 toward the plasma cathode 2122.

The plasma generation unit 2100 may include a plasma magnet module 2140. The plasma magnet module 2140 may be connected or coupled to the plasma chamber 2110.

For example, the plasma magnet module 2140 may be connected or coupled to the plasma chamber lid 2115. For another example, the plasma magnet module 2140 may be spaced apart from the plasma chamber 2110.

The plasma magnet module 2140 may provide a magnetic flux to the plasma chamber 2110. For example, the plasma magnet module 2140 may provide a magnetic flux to the plasma chamber space 2112. For example, the plasma magnet module 2140 may provide a magnetic flux to the second plasma chamber space 2112b.

The plasma generation unit 2100 may include a gas inlet 2150. The gas inlet 2150 may form the shape of a pipe or a hose. The gas inlet 2150 may be connected or coupled to the plasma chamber lid 2115. The gas inlet 2150 may be connected to the gas injection hole 2116.

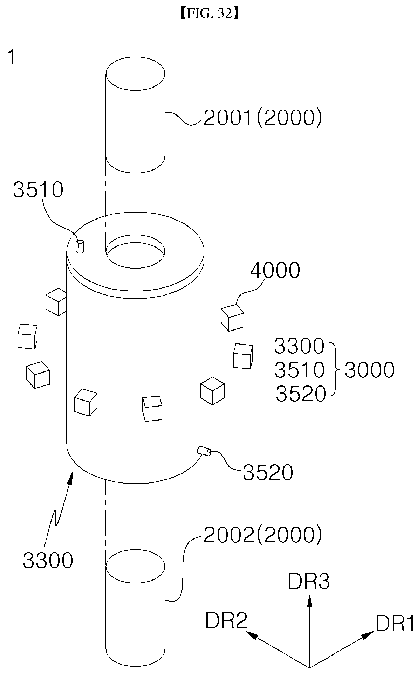

The gas inlet 2150 may receive gas from a gas feeder 5000 (see FIG. 32). The gas inlet 2150 may deliver the gas to the gas injection hole 2116.

The gas delivered to the gas injection hole 2116 may reach the first plasma chamber space 2112a. The gas reaching the first plasma chamber space 2112a may pass through the hole formed in the first plasma cathode 2122a and reach the second plasma chamber space 2112b.

The gas reaching the second plasma chamber space 2112b may include free electrons. The free electrons may have a negative charge. The free electrons may be accelerated by the electric field formed between the plasma anode 2121 and the plasma cathode 2122.

The gas reaching the second plasma chamber space 2112b may include a plurality of neutral gas particles. The accelerated free electrons may collide with the neutral gas particles. The free electrons may transfer energy to the neutral gas particles.

At least some of the neutral gas particles that have received energy may lose electrons. That is, the neutral gas particles may be separated into positive ions and free electrons.

The positive ions and the free electrons may be confined by a magnetic flux. For example, negatively charged free electrons may move toward the plasma anode 2121 but may not reach the plasma anode 2121 due to the magnetic flux.

The mass of the positive ions may be greater than 1000 times the mass of the electrons. The degree to which the movement of the positive ions is confined by the magnetic flux may be less than the degree to which the movement of electrons is confined by the magnetic flux.

The positive ions may move toward the second plasma cathode 2122b. At least some of the plurality of positive ions moving toward the second plasma cathode 2122b may pass through the hole formed in the second plasma cathode 2122b.

For another example, the plasma generation unit 2100 may generate plasma by at least one of an electron cyclotron resonance (ECR) plasma generation method, a radio frequency (RF) plasma generation method, or an arc plasma generation method.

The plasma extraction electrode 2123 may form an electric potential. For example, the electric potential formed at the plasma extraction electrode 2123 may be lower than the electric potential formed at the second plasma cathode 2122b.

For example, an electric field may be formed between the second plasma cathode 2122b and the plasma extraction electrode 2123. For example, the electric field between the second plasma cathode 2122b and the plasma extraction electrode 2123 may be directed from the second plasma cathode 2122b to the plasma extraction electrode 2123.

The positive ions passing through the hole formed in the second plasma cathode 2122b may be accelerated by the electric field formed between the second plasma cathode 2122b and the plasma extraction electrode 2123. The accelerated positive ions may be discharged to the rear of the plasma chamber 2110 by passing through the hole formed in the plasma extraction electrode 2123.

The accelerated positive ions may move to the rear of the plasma chamber 2110 in the form of a beam. In other words, the plasma generation unit 2100 may form an ion beam to the rear of the plasma chamber 2110.

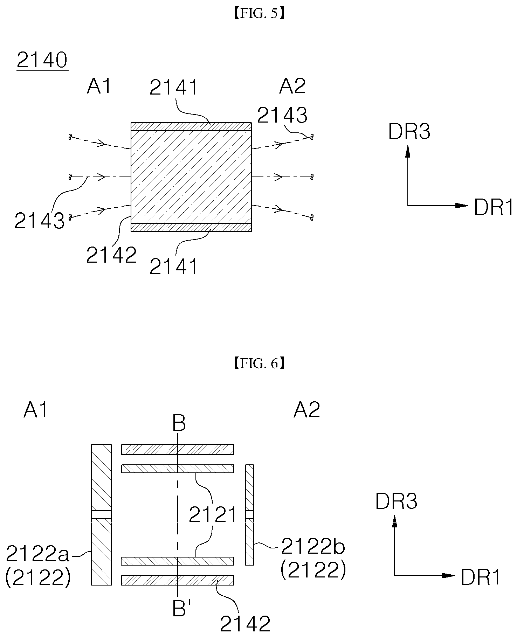

FIG. 5 illustrates a plasma magnet module illustrated in FIG. 3.

Referring to FIG. 5, the plasma magnet module 2140 may include a plasma magnet case 2141. The plasma magnet case 2141 may form an outer appearance of the plasma magnet module 2140.

The plasma magnet module 2140 may include a plasma magnet 2142. The plasma magnet 2142 may be accommodated in the plasma magnet case 2141. The plasma magnet 2142 may form magnetic field lines 2143 or magnetic flux 2143. The magnetic field lines 2143 or the magnetic flux 2143 may extend to the plasma chamber space 2112 (see FIG. 4). The magnetic flux 2143 formed by the plasma magnet 2142 may be called a "plasma magnet magnetic flux."

FIG. 6 is a cross-sectional view of a plasma generation unit illustrated in FIG. 2 taken along A1-A2 and illustrates that a plasma magnet module is adjacent to a plasma anode. For convenience of explanation, other components except the plasma electrode 2120 and the plasma magnet module 2140 may not be illustrated in FIG. 6.

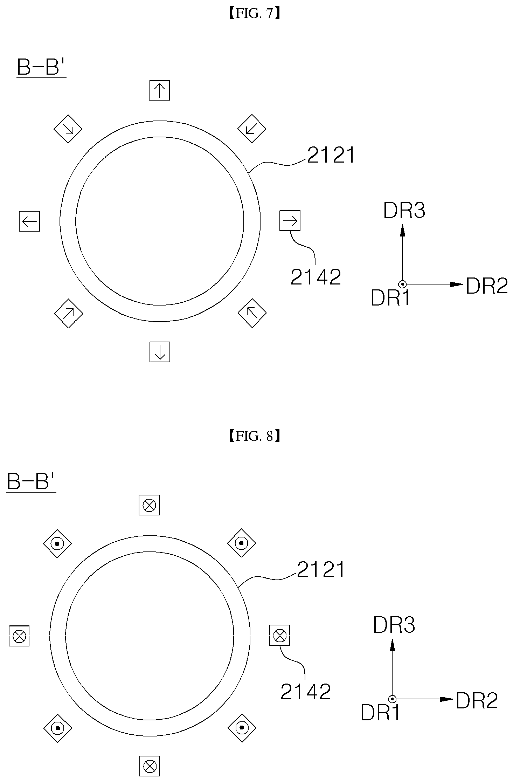

FIGS. 7 and 8 are cross-sectional views of a plasma anode and a plasma magnet illustrated in FIG. 6 taken along B-B'.

Referring to FIGS. 6 to 8, the plasma magnet 2142 may be formed along the plasma anode 2121. For example, the plasma magnet 2142 may be elongated in the front-rear direction.

A plurality of plasma magnets 2142 may be formed. The plurality of plasma magnets 2142 may be spaced apart from each other. The plurality of plasma magnets 2142 may be arranged outside the plasma anode 2121.

The plurality of plasma magnets 2142 may be arranged in a circumferential direction of the plasma anode 2121. The circumferential direction of the plasma anode 2121 may be set based on an axial direction of the plasma anode 2121. The axial direction of the plasma anode 2121 may be the first direction DR1 or the front-rear direction. In other words, the circumferential direction of the plasma anode 2121 may be an azimuthal direction of the plasma anode 2121.

Directions of magnetic fluxes formed by two adjacent plasma magnets 2142 among the plurality of plasma magnets 2142 may be different from each other. For example, the direction of the magnetic fluxes formed by the two adjacent plasma magnets 2142 may be opposite to each other.

For example, as illustrated in FIG. 7, a plasma magnet 2142 adjacent to a plasma magnet 2142 that forms a magnetic flux directed outward the plasma anode 2121 may form a magnetic flux directed toward the plasma anode 2121. In FIG. 7, arrows marked on the plasma magnet 2142 may indicate directions of the magnetic flux formed inside the plasma magnet 2142.

For example, as illustrated in FIG. 8, a plasma magnet 2142 adjacent to a plasma magnet 2142 that forms a magnetic flux directed forward inside the plasma anode 2121 may form a magnetic flux directed rearward inside the plasma anode 2121. In FIG. 8, the dots marked on the plasma magnet 2142 may indicate the first direction DR1, and 'x' marked on the plasma magnet 2142 may indicate the opposite direction of the first direction DR1.

Referring to FIGS. 6 to 8, the plasma magnet 2142 may form the magnetic flux inside the plasma anode 2121. The magnetic flux formed inside the plasma anode 2121 can prevent electrons from reaching the plasma anode 2121. Thus, the plasma generation unit 2100 can effectively form plasma.

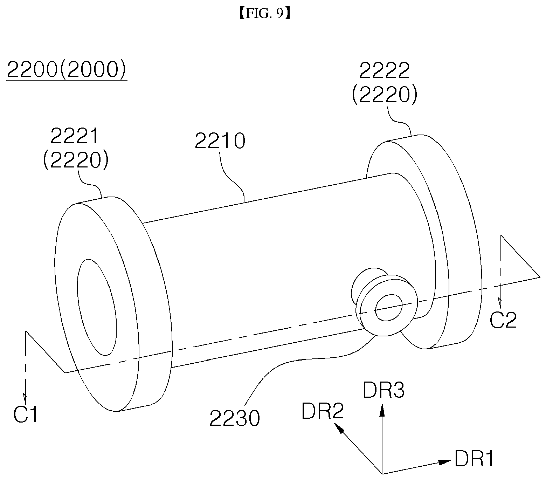

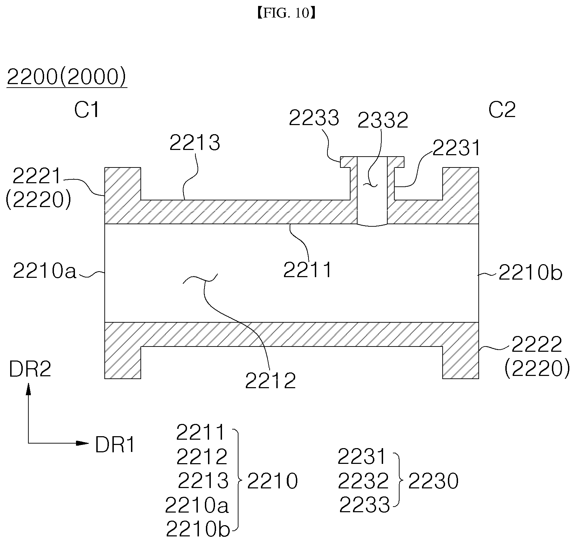

FIG. 9 illustrates a neutron chamber according to an embodiment of the present disclosure. FIG. 10 is a cross-sectional view of a neutron chamber illustrated in FIG. 9 taken along B1-B2.

Referring to FIGS. 9 and 10, the neutron generating device 2000 may include a neutron chamber 2200. The neutron chamber 2200 may form a hollow portion therein. The ion beam generated in the plasma generation unit 2100 (see FIGS. 2 and 3) may be incident on the neutron chamber 2200 and collide with a target particle. For example, positive ion particles of the ion beam may collide with the target particle.

When the positive ion particles collide with the target particle in a state in which the kinetic energy of the positive ion particles is greater than a reference energy, a nuclear reaction may occur. The nuclear reaction may be, for example, a nuclear fusion reaction.

For example, when the positive ion particles include deuterium or/and tritium, the target particle includes deuterium or/and tritium, and the positive ion particles collide with the target particle in a state in which the energy of the positive ion particles is greater than the reference energy, a nuclear fusion reaction occurs, and thus neutrons may be produced.

For example, when deuterium and tritium collide and the nuclear fusion reaction occurs, helium and neutrons may be produced to generate heat.

For example, when deuterium and deuterium collide and the nuclear fusion reaction occurs, there is a 50% probability that helium and neutrons will be produced to generate heat, and a 50% probability that tritium and hydrogen will be produced to generate heat.

The neutron chamber 2200 may include a neutron chamber body 2210. The neutron chamber body 2210 may be extended or elongated in one direction. For example, a longitudinal direction of the neutron chamber body 2210 may be the front-rear direction or parallel to the first direction DR1.

The neutron chamber body 2210 may form a hollow portion therein. For example, the neutron chamber body 2210 may include a neutron chamber space 2212 as the hollow portion therein. The neutron chamber space 2212 may form a shape extended in the front-rear direction.

The neutron chamber body 2210 may form an opening. For example, a neutron chamber inlet port 2210a and a neutron chamber mount port 2210b may be openings formed in the neutron chamber body 2210. The neutron chamber inlet port 2210a and the neutron chamber mount port 2210b may be connected to or communicate with the neutron chamber space 2212.

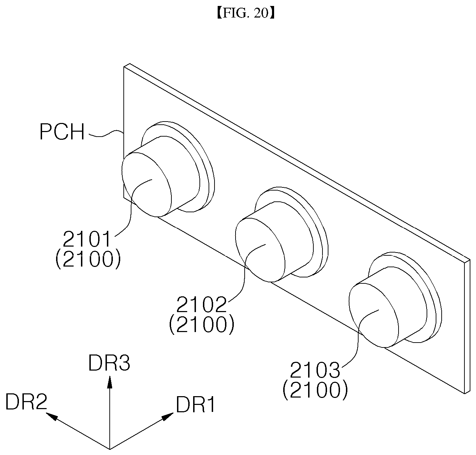

The neutron chamber inlet port 2210a may be connected or coupled to the plasma generation unit 2100 (see FIGS. 2 and 3). The neutron chamber inlet port 2210a may be connected or coupled to a plasma chamber holder PCH (see FIG. 20).

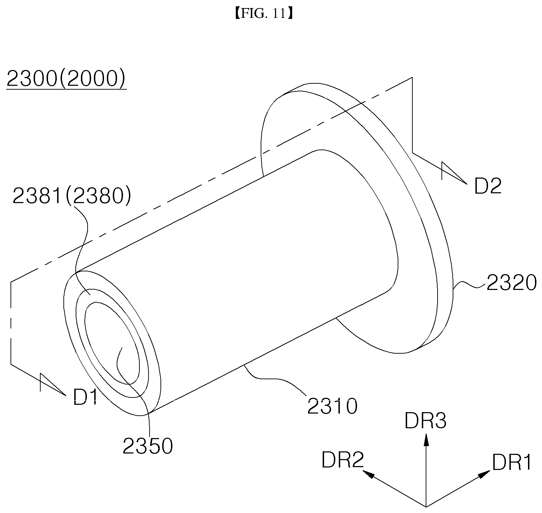

The neutron chamber mount port 2210b may be connected or coupled to a target unit 2300 (see FIG. 11, FIG. 14, and FIG. 25). For example, the target unit 2300 (see FIG. 11, FIG. 14, and FIG. 25) may pass through the neutron chamber mount port 2210b and enter the neutron chamber space 2212.

The neutron chamber body 2210 may include a neutron chamber body inner surface 2211. The neutron chamber body inner surface 2211 may form a boundary of the neutron chamber space 2212. The neutron chamber body inner surface 2211 may face or be directed toward the neutron chamber space 2212.

The neutron chamber body 2210 may include a neutron chamber body outer surface 2213. The neutron chamber body outer surface 2213 may form an outer surface of the neutron chamber body 2210.

The neutron chamber 2200 may include a neutron chamber flange 2220. The neutron chamber flange 2220 may be connected or coupled to at least one of the neutron chamber inlet port 2210a or the neutron chamber mount port 2210b. The neutron chamber flange 2220 may extend or protrude from the neutron chamber body 2210.

For example, the neutron chamber 2200 may include a neutron chamber incident flange 2221 that is connected to the neutron chamber inlet port 2210a and extends or protrudes from the neutron chamber body 2210.

A direction in which the neutron chamber incident flange 2221 extends or protrudes from the neutron chamber body 2210 may be a radial direction when using a direction toward the neutron chamber inlet port 2210a in the neutron chamber space 2212 as the axis.

For example, the neutron chamber 2200 may include a neutron chamber mount flange 2222 that is connected to the neutron chamber mount port 2210b and extends or protrudes from the neutron chamber body 2210.

A direction in which the neutron chamber mount flange 2222 extends or protrudes from the neutron chamber body 2210 may be a radial direction when using a direction toward the neutron chamber mount port 2210b in the neutron chamber space 2212 as the axis.

The neutron chamber flange 2220 may include or indicate at least one of the neutron chamber incident flange 2221 or the neutron chamber mount flange 2222.

The neutron chamber 2200 may include a neutron chamber vacuum cassette 2230. The neutron chamber vacuum cassette 2230 may include a neutron chamber vacuum cassette body 2231.

The neutron chamber vacuum cassette body 2231 may extend or protrude from the neutron chamber body 2210. The neutron chamber vacuum cassette body 2231 may be spaced apart from the neutron chamber inlet port 2210a and the neutron chamber mount port 2210b.

The neutron chamber vacuum cassette 2230 may include a neutron chamber vacuum cassette hole 2232. The neutron chamber vacuum cassette hole 2232 may be a hollow portion formed in the neutron chamber vacuum cassette body 2231. The neutron chamber vacuum cassette hole 2232 may be connected to or communicate with the neutron chamber space 2212.

The neutron chamber vacuum cassette 2230 may include a neutron chamber vacuum cassette flange 2233. The neutron chamber vacuum cassette flange 2233 may extend or protrude from an end portion of the neutron chamber vacuum cassette body 2231.

For example, a direction in which the neutron chamber vacuum cassette flange 2233 extends or protrudes from the neutron chamber vacuum cassette body 2231 may be a radial direction when using a direction, in which the neutron chamber vacuum cassette body 2231 extends, as the axis.

The neutron chamber vacuum cassette flange 2233 may be connected or coupled to a circulation device 6000 (see FIG. 32). If a pressure of the circulation device 6000 (see FIG. 32) is lower than a pressure of the neutron chamber space 2212, gas located in the neutron chamber space 2212 may pass through the neutron chamber vacuum cassette hole 2232 and move to the circulation device 6000 (see FIG. 32). Through this process, the pressure of the neutron chamber space 2212 may be lowered.

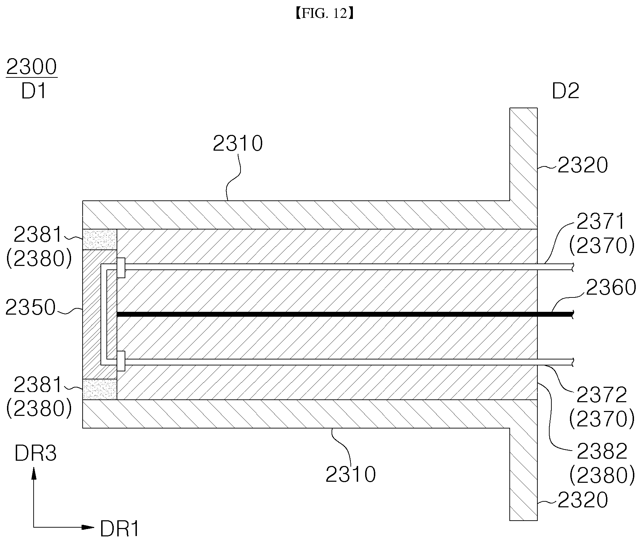

FIG. 11 illustrates a target unit including a target body. FIG. 12 is a cross-sectional view of a target unit illustrated in FIG. 11 taken along D1-D2.

Referring to FIGS. 11 and FIGS. 12, the neutron generating device 2000 may include the target unit 2300. The target unit 2300 may include a target body 2310. The target body 2310 may be extended or elongated in one direction. For example, the target body 2310 may be extended or elongated in the front-rear direction or the first direction DR1.

A hollow portion may be formed in the target body 2310. The hollow portion formed in the target body 2310 may be extended or elongated in a longitudinal direction of the target body 2310.

The hollow portion formed in the target body 2310 may be open forward. For example, the hollow portion formed in the target body 2310 may be open toward the plasma generation unit 2100 (see FIG. 2 and FIG. 3).

The target unit 2300 may include a target flange 2320. The target flange 2320 may extend or protrude from an end portion of the target body 2310. For example, the target flange 2320 may extend or protrude from a rear end portion of the target body 2310.

A direction in which the target flange 2320 extends or protrudes from the target body 2310 may be the longitudinal direction of the target body 2310 or a radial direction when the extended direction is the axis.

The target flange 2320 may be coupled to the neutron chamber 2200 (see FIG. 9 and FIG. 10). For example, the target flange 2320 may be coupled to the neutron chamber mount flange 2222 (see FIG. 9 and FIG. 10).

The target unit 2300 may include a target electrode 2350. The target electrode 2350 may be located in the hollow portion formed in the target body 2310. The target electrode 2350 may form a front end portion of the target unit 2300. For example, the target electrode 2350 may form at least a portion of a front face of the target unit 2300.

The target electrode 2350 may face or be directed toward the plasma generation unit 2100 (see FIG. 2 and FIG. 3). For example, the target electrode 2350 may face or be directed toward the plasma extraction electrode 2123 (see FIG. 3).

The target electrode 2350 may form an electric potential. For example, the electric potential of the target electrode 2350 may be lower than the electric potential of the plasma extraction electrode 2123 (see FIG. 3). For example, an electric field may be formed in a direction from the plasma extraction electrode 2123 (see FIG. 3) toward the target electrode 2350.

The target unit 2300 may include a target electric potential wire 2360. The target electric potential wire 2360 may be connected to the target electrode 2350. The target electric potential wire 2360 may be connected to an external power source.

The target electric potential wire 2360 may form a shape extending from the target electrode 2350 toward the target flange 2320. At least a portion of the target electric potential wire 2360 may be located in the hollow portion formed in the target body 2310.

The target unit 2300 may include a cooling hose 2370. The cooling hose 2370 may be a passage through which a coolant flows. For example, the cooling hose 2370 may cool the target electrode 2350.

The cooling hose 2370 may form a shape extending from the target electrode 2350 toward the target flange 2320. At least a portion of the cooling hose 2370 may be located in the hollow formed in the target body 2310.

The cooling hose 2370 may include a cooling injection hose 2371 that receives the coolant from the outside. The cooling hose 2370 may include a cooling discharge hose 2372 that discharges the coolant to the outside.

For example, the cooling hose 2370 may be in contact with the target electrode 2350. The cooling hose 2370 may exchange heat with the target electrode 2350. For example, heat may be transferred to the target electrode 2350 via the cooling hose 2370. The cooling injection hose 2371 and the cooling discharge hose 2372 may be connected to each other.

For example, the cooling hose 2370 may be connected or coupled to the target electrode 2350. The cooling injection hose 2371, the target electrode 2350, and the cooling discharge hose 2372 may be sequentially connected.

For example, the cooling injection hose 2371 may transfer the coolant to the target electrode 2350. The target electrode 2350 may exchange heat with the coolant transferred to the target electrode 2350. For example, the cooling discharge hose 2372 may receive the coolant from the target electrode 2350.

The target unit 2300 may include a target insulator 2380. The target insulator 2380 may include a first target insulator 2381. The first target insulator 2381 may be located between the target electrode 2350 and the target body 2310.

The first target insulator 2381 may surround the perimeter of the target electrode 2350. For example, the first target insulator 2381 may form the shape of a ring. The first target insulator 2381 may be formed of a material including an electrical insulating material.

The target insulator 2380 may include a second target insulator 2382. The second target insulator 2382 may be located behind the target electrode 2350. The second target insulator 2382 may be located in the hollow portion formed in the target body 2310.

The second target insulator 2382 may be located in the hollow portion formed in the target body 2310. The second target insulator 2382 may fix the target electric potential wire 2360 and the cooling hose 2370. The second target insulator 2382 may be formed of a material including an electrical insulating material.

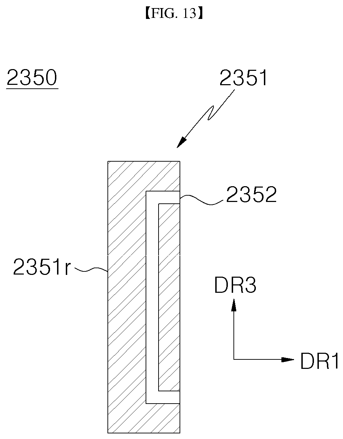

FIG. 13 is an enlarged view of a target electrode illustrated in FIG. 12.

Referring to FIGS. 12 and 13, the target electrode 2350 may include a target electrode body 2351. The target electrode body 2351 may be connected to the target electric potential wire 2360.

For example, the target electrode body 2351 may form the shape of a plate. For another example, the target electrode body 2351 may form the shape of a rod.

The target electrode body 2351 may be formed of a material including metal. For example, the target electrode body 2351 may be formed of a material including tungsten.

The target electrode 2350 may include a target electrode body reaction surface 2351r. The target electrode body reaction surface 2351r may be a portion of an outer surface of the target electrode body 2351.

The target electrode body reaction surface 2351r may be directed forward or face forward. For example, the target electrode body reaction surface 2351r may be directed toward or face the plasma extraction electrode 2123 (see FIG. 3).

The ion beam provided by the plasma generation unit 2100 (see FIG. 2 and FIG. 3) may be incident on the target electrode body reaction surface 2351r. A target material may be located on the target electrode body reaction surface 2351r.

The particles of the ion beam may include, for example, at least one of deuterium or tritium. The target material may adsorb the particles of the ion beam. For example, the target material may include a material that adsorbs the particles of the ion beam. For example, the target material may include a metal that adsorbs hydrogen particles (including isotopes of hydrogen).

The target electrode 2350 may include a target electrode flow passage 2352. The target electrode flow passage 2352 may be formed in the target electrode body 2351. The target electrode flow passage 2352 may be a hole formed in the target electrode body 2351.

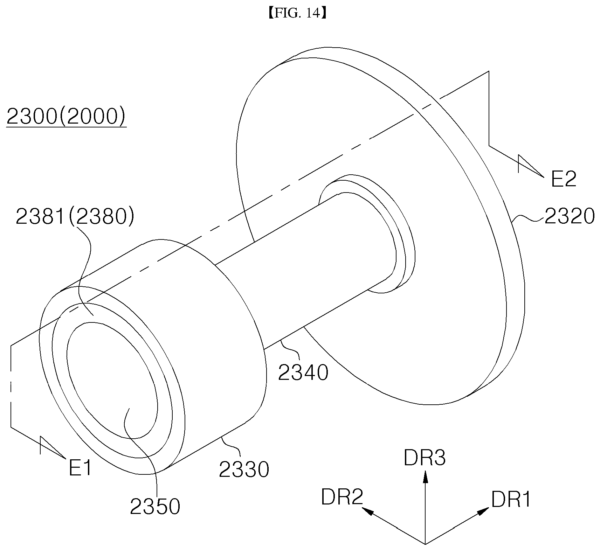

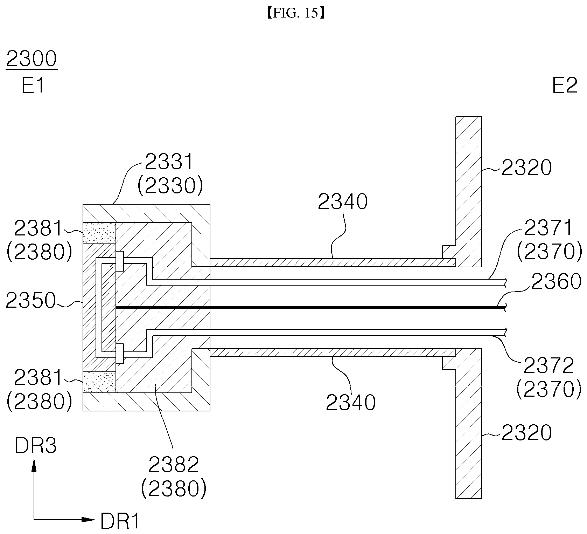

FIG. 14 illustrates a target unit including a target head. FIG. 15 is a cross-sectional view of a target unit illustrated in FIG. 14 taken along E1-E2.

Referring to FIGS. 14 and 15, the target unit 2300 may include a target head 2330. The target head 2330 may be extended or elongated in one direction. For example, the target head 2330 may be extended or elongated in the front-rear direction or the first direction DR1.

A hollow portion may be formed in the target head 2330. The hollow portion formed in the target head 2330 may be extended or elongated in a longitudinal direction of the target head 2330.

The hollow portion formed in the target head 2330 may be open forward. For example, the hollow portion formed in the target head 2330 may be open toward the plasma generation unit 2100 (see FIGS. 2 and 3).

The target unit 2300 may include a target neck 2340. The target neck 2340 may extend rearward from a rear end of the target head 2330. The target neck 2340 may connect the target head 2330 and the target flange 2320. For example, the target neck 2340 may extend rearward from the target head 2330 and lead to the target flange 2320.

The target neck 2340 may accommodate the target electric potential wire 2360 and the cooling hose 2370. For example, the target neck 2340 may form a hollow portion that accommodates the target electric potential wire 2360 and the cooling hose 2370.

The target electrode 2350 may be located in the hollow portion formed in the target head 2330. The target electrode 2350 may form the front end portion of the target unit 2300. For example, the target electrode 2350 may form at least a portion of the front face of the target unit 2300. The target electrode 2350 may face or be directed toward the plasma extraction electrode 2123 (see FIG. 3).

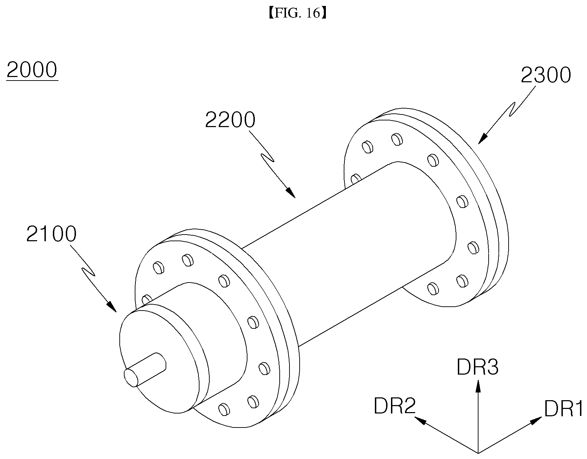

FIG. 16 illustrates a neutron generating device.

Referring to FIGS. 1 to 16, the neutron generating device 2000 may include the plasma generation unit 2100. The plasma generation unit 2100 may generate plasma and generate an ion beam from the plasma to provide the ion beam to the neutron chamber 2200. For example, the ion beam may be drawn from the plasma extraction electrode 2123 and may be incident on the target electrode 2350.

The neutron generating device 2000 may include the neutron chamber 2200 and the target unit 2300. The target unit 2300 may be coupled to the neutron chamber 2200. The neutron chamber 2200 may be coupled to the plasma generation unit 2100.

Ion particles of the ion beam incident on the target electrode 2350 may collide with the target material located on the target electrode 2350. The ion particles and the target material may undergo a nuclear fusion reaction. Through the nuclear fusion reaction, neutrons may be generated.

The neutrons generated at the target electrode 2350 may be radiated omnidirectionally. The neutrons generated at the target electrode 2350 may penetrate the neutron chamber 2200 and propagate to the outside of the neutron chamber 2200.

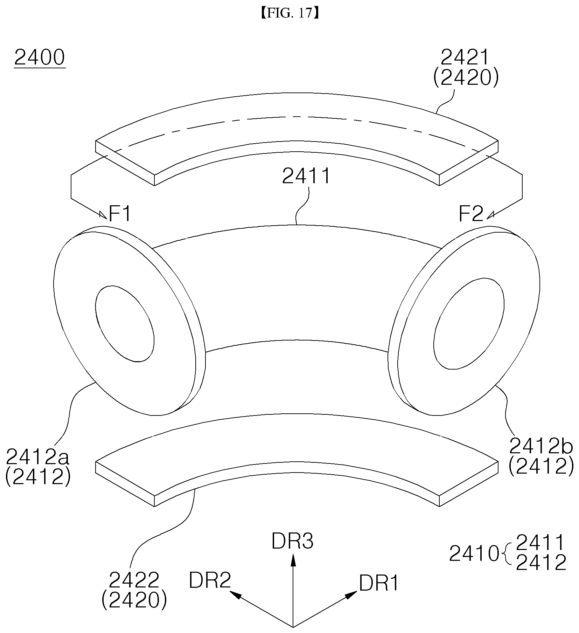

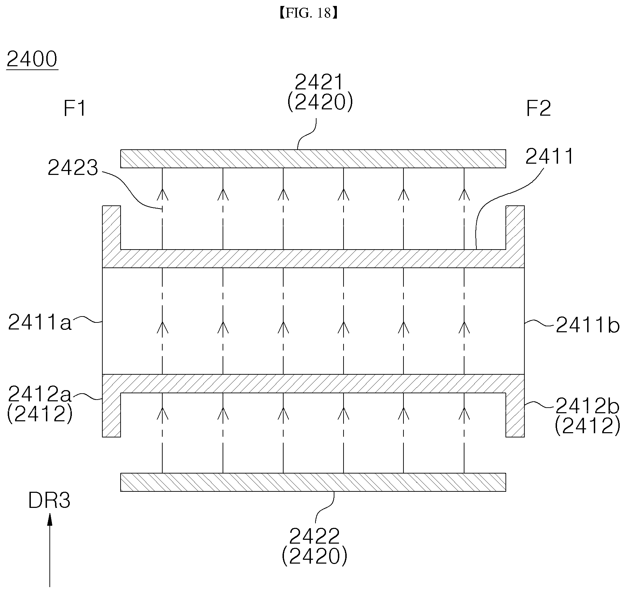

FIG. 17 illustrates a beam bender according to an embodiment of the present disclosure. FIG. 18 is a cross-sectional view of a beam bender illustrated in FIG. 17 taken along F1-F2.

Referring to FIGS. 17 and 18, the neutron generating device 2000 (see FIG. 16) may include a beam bender 2400. The beam bender 2400 may connect the plasma generation unit 2100 (see FIG. 16) and the neutron chamber 2200. The beam bender 2400 may bend a path of the ion beam drawn from the plasma extraction electrode 2123 (see FIG. 3).

The beam bender 2400 may include a beam bender chamber 2410. The beam bender chamber 2410 may include a beam bender chamber body 2411. The beam bender chamber body 2411 may form the shape of a bent or curved pipe.

For example, the beam bender chamber 2410 may include a beam bender chamber inlet port 2411a and a beam bender chamber outlet port 2411b. The beam bender chamber body 2411 may extend from the beam bender chamber inlet port 2411a and lead to the beam bender chamber outlet port 2411b.

A hollow portion may be formed in the beam bender chamber body 2411. The hollow portion formed in the beam bender chamber body 2411 may be open at the beam bender chamber inlet port 2411a and the beam bender chamber outlet port 2411b.

The beam bender chamber 2410 may include a beam bender chamber flange 2412. For example, the beam bender chamber 2410 may include a beam bender chamber incident flange 2412a that is connected to or adjacent to the beam bender chamber inlet port 2411a and extends or protrudes from the beam bender chamber body 2411.

For example, the beam bender chamber 2410 may include a beam bender chamber extraction flange 2412b that is connected to or adjacent to the beam bender chamber outlet port 2411b and extends or protrudes from the beam bender chamber body 2411.

The beam bender chamber flange 2412 may include or indicate at least one of the beam bender chamber incident flange 2412a or the beam bender chamber extraction flange 2412b. A direction in which the beam bender chamber flange 2412 protrudes or extends from the beam bender chamber body 2411 may be a radial direction when using an extended direction or a longitudinal direction of the beam bender chamber body 2411 as the axis.

The beam bender chamber 2410 may be coupled to the plasma generation unit 2100 (see FIG. 16). For example, the beam bender chamber incident flange 2412a may be coupled to the plasma chamber flange 2113 (see FIG. 3).

The beam bender chamber 2410 may be coupled to the neutron chamber 2200 (see FIG. 16). For example, the beam bender chamber extraction flange 2412b may be coupled to the neutron chamber incident flange 2221 (see FIG. 9 and FIG. 10).

The beam bender 2400 may include a beam bender magnet 2420. The beam bender magnet 2420 may be adjacent to or in contact with the beam bender chamber 2410. The beam bender magnet 2420 may form a magnetic flux 2423 in the beam bender chamber 2410.

The magnetic flux 2423 formed by the beam bender magnet 2420 may be referred to as a "beam bender magnetic flux." The magnetic flux 2423 may be perpendicular to the plane formed by the curved axis of the beam bender chamber body 2411.

The ion beam drawn from the plasma chamber unit 2100 (see FIG. 16) may enter the beam bender chamber inlet port 2411a. The ion beam incident on the beam bender chamber inlet port 2411a may receive a force in a direction perpendicular to both a movement direction of the ion beam and a direction of the magnetic flux.

For example, an ion beam incident on the beam bender chamber inlet port 2411a may receive Lorentz force. If particles of the ion beam are positive ion particles, a direction of the Lorentz force may be a direction of the cross product of a movement direction of the ion beam particles and a direction of the magnetic flux 2423. For example, the Lorentz force may be a value obtained by multiplying the cross product of the velocity of the ion beam particles and a magnetic field due to the magnetic flux 2423 by a charge amount of the ion beam particles.

Since the Lorentz force is perpendicular to the movement direction of the ion beam particles, the Lorentz force may act as a centripetal force on the ion beam particles. That is, a path of the ion beam incident on the beam bender chamber inlet port 2411a may be bent.

For example, the ion beam particles incident on the beam bender chamber inlet port 2411a may move along an arc path and reach the beam bender chamber outlet port 2411b.

The beam bender magnet 2420 may form different magnetic fluxes 2423 depending on the space. For example, the beam bender magnet 2420 may form different magnetic fluxes 2423 along a width direction of the beam bender chamber 2410. For example, an intensity of the magnetic flux 2423 may increase as the beam bender chamber 2410 goes toward a bending direction.

A radius of the trajectory formed by the ion beam particles by the Lorentz force may be inversely proportional to an intensity of the magnetic field. When the intensity of the magnetic flux 2423 increases as the beam bender chamber 2410 goes toward the bending direction, multiple particles of the particle beam reaching the beam bender chamber outlet port 2411b may be arranged along the width direction of the beam bender chamber 2410.

When the beam bender 2400 connects the plasma generation unit 2100 (see FIG. 16) and the neutron chamber 2200 (see FIG. 16), the movement direction of the ion beam particles incident on the neutron chamber 2200 (see FIG. 16) may differ from the direction of the ion beam particles drawn from the plasma generation unit 2100 (see FIG. 16).

Thus, the plasma generation unit 2100 (see FIG. 16) may not be exposed to neutrons generated in the neutron chamber 2200 (see FIG. 16). In other words, damage to the plasma generation unit 2100 (see FIG. 16) by the neutrons may be reduced.

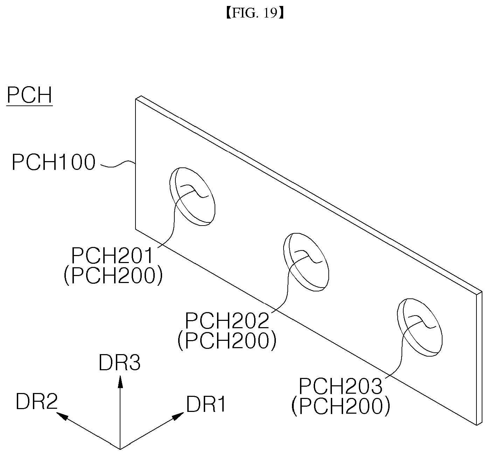

FIG. 19 illustrates a plasma chamber holder according to an embodiment of the present disclosure. FIG. 20 illustrates that a plurality of plasma generation units is coupled to a plasma chamber holder.

Referring to FIGS. 19 and 20, the neutron generating device 2000 (see FIG. 16) may include a plasma chamber holder PCH. The plasma chamber holder PCH may include a plasma chamber holder body PCH100.

The plasma chamber holder body PCH100 may form the shape of a plate. For example, the plasma chamber holder body PCH100 may form two faces. For example, the plasma chamber holder body PCH100 may form a face and another face. The face and the other face of the plasma chamber holder body PCH100 may be opposite to or face each other in opposite directions.

For example, the face and the other face of the plasma chamber holder body PCH100 may be a front face and a rear face of the plasma chamber holder body PCH100, respectively.

The plasma chamber holder PCH may include a plasma chamber holder opening PCH200. The plasma chamber holder opening PCH200 may be formed in the plasma chamber holder body PCH100.

The plasma chamber holder opening PCH200 may be connected to the face and the other face of the plasma chamber holder body PCH100. For example, the plasma chamber holder opening PCH200 may penetrate the face and the other face of the plasma chamber holder body PCH100.

A plurality of plasma chamber holder openings PCH200 may be provided. For example, the plasma chamber holder PCH may include a first plasma chamber holder opening PCH201, a second plasma chamber holder opening PCH202, and a third plasma chamber holder opening PCH203.

The plasma chamber holder opening PCH200 may include or indicate at least one of the first plasma chamber holder opening PCH201, the second plasma chamber holder opening PCH202, or the third plasma chamber holder opening PCH203.

The plurality of plasma chamber openings PCH200 may be spaced apart in one direction. For example, the first plasma chamber holder opening PCH201, the second plasma chamber holder opening PCH202, and the third plasma chamber holder opening PCH203 may be spaced apart in the second direction DR2 and arranged sequentially.

The plasma generation unit 2100 may be coupled to the plasma chamber holder PCH. For example, the plasma generation unit 2100 may be coupled to the plasma chamber holder body PCH100. For example, the plasma generation unit 2100 may be coupled to a face of the plasma chamber holder body PCH100. For example, the plasma generation unit 2100 may be coupled to the front face of the plasma chamber holder body PCH100.

For example, the plasma chamber holder opening PCH200 may be coupled to the plasma generation unit 2100. For example, the plasma generation unit 2100 may be fitted into and coupled to the plasma chamber holder opening PCH200.

For example, the plurality of plasma chamber holder openings PCH200 may be respectively coupled to the plurality of plasma generation units 2100. For example, the first plasma chamber holder opening PCH201 may be coupled to a first plasma generation unit 2101. For example, the second plasma chamber holder opening PCH202 may be coupled to a second plasma generation unit 2102. For example, the third plasma chamber holder opening PCH203 may be coupled to a third plasma generation unit 2103.

The plasma generation unit 2100 may include or indicate at least one of the first plasma generation unit 2101, the second plasma generation unit 2102, or the third plasma generation unit 2103.

In a state in which the plasma generation unit 2100 is coupled to the plasma chamber holder PCH, the plasma extraction electrode 2123 may be located in the plasma chamber holder opening PCH200.

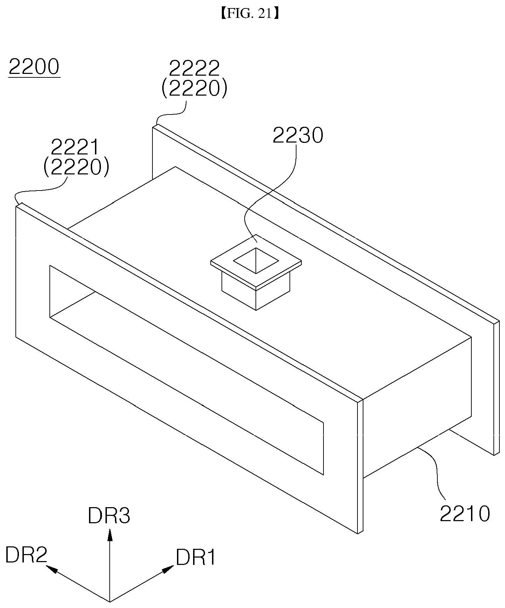

The plasma chamber holder PCH may be coupled to the neutron chamber 2200 (see FIG. 21). For example, the neutron chamber 2200 (see FIG. 21) may be coupled to the plasma chamber holder body PCH100. For example, the neutron chamber 2200 (see FIG. 21) may be coupled to the other face of the plasma chamber holder body PCH100. For example, the neutron chamber 2200 (see FIG. 21) may be coupled to the rear face of the plasma chamber holder body PCH100.

In a state in which the plasma generation unit 2100 and the neutron chamber 2200 (see FIG. 21) are coupled to the plasma chamber holder PCH, the plasma extraction electrode 2123 (see FIG. 3) may face the hollow portion formed in the neutron chamber body 2210.

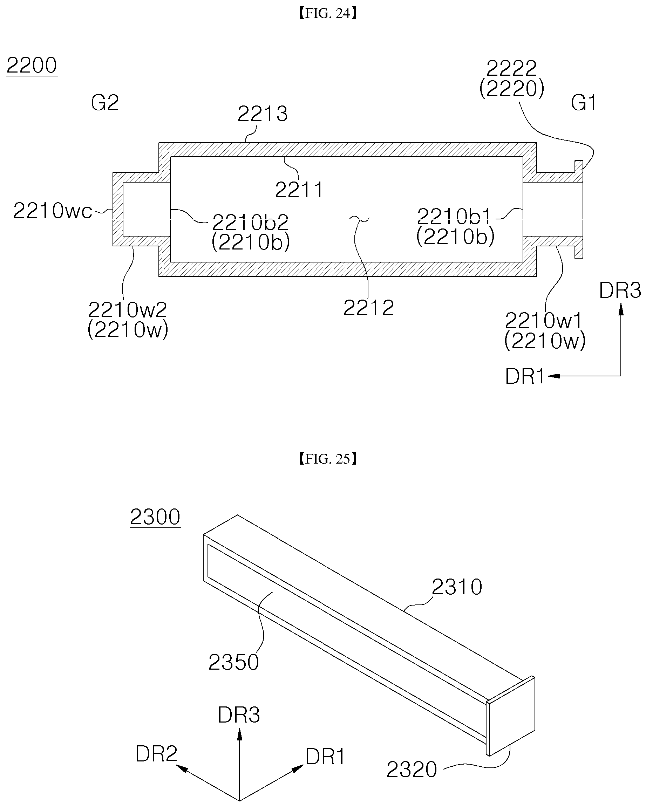

For example, in a state in which the plasma generation unit 2100 and the neutron chamber 2200 (see FIG. 21) are coupled to the plasma chamber holder PCH, the plasma chamber holder opening PCH200 may be located between the plasma extraction electrode 2123 (see FIG. 3) and the target electrode 2350 (see FIG. 25).

For example, the plasma extraction electrode 2123 (see FIG. 3) may face the target electrode 2350 (see FIG. 25). For example, the plasma extraction electrode 2123 (see FIG. 3) may face the target electrode 2350 (see FIG. 25) through the plasma chamber holder opening PCH200.

A longitudinal direction of the plasma chamber body 2111 may be a width direction of the neutron generating device 2000 (see FIG. 16). The longitudinal direction of the plasma chamber body 2111 may be ae direction in which the plurality of plasma generation units 2100 are arranged.

For example, the longitudinal direction of the plasma chamber body 2111 may be parallel to a direction in which the plurality of plasma chamber holder openings PCH200 are arranged. For example, the longitudinal direction of the plasma chamber body 2111 may be parallel to the second direction DR2.

FIG. 21 illustrates a neutron chamber coupled to a plasma chamber holder illustrated in FIG. 20.

Referring to FIG. 21, the neutron chamber 2200 may include the neutron chamber body 2210. A hollow portion may be formed in the neutron chamber body 2210. The longitudinal direction of the neutron chamber body 2210 may be parallel to a longitudinal direction of the plasma chamber holder PCH (see FIG. 20).

The neutron chamber 2200 may include the neutron chamber flange 2220. The neutron chamber flange 2220 may extend or protrude from the neutron chamber body 2210. A plurality of neutron chamber flanges 2220 may be provided. For example, the neutron chamber 2200 may include the neutron chamber incident flange 2221 and the neutron chamber mount flange 2222.

The neutron chamber 2200 may be coupled to the plasma chamber holder PCH (see FIG. 20). For example, the neutron chamber incident flange 2221 may be coupled to the plasma chamber holder PCH (see FIG. 20).

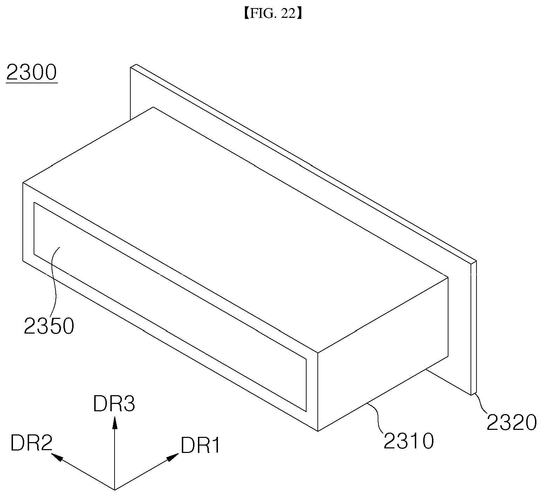

The neutron chamber 2200 may be coupled to the target unit 2300 (see FIG. 22). For example, the neutron chamber mount flange 2222 may be coupled to the target unit 2300 (see FIG. 22).

FIG. 22 illustrates a target unit coupled to a neutron chamber illustrated in FIG. 21.

Referring to FIG. 22, the target unit 2300 may include the target body 2310. The longitudinal direction of the target body 2310 may be parallel to the longitudinal direction of the neutron chamber body 2210 (see FIG. 21).

The target unit 2300 may include the target flange 2320. The target flange 2320 may extend or protrude from an end portion of the target body 2310. The target flange 2320 may be coupled to the neutron chamber mount flange 2222 (see FIG. 21).

The target unit 2300 may include the target electrode 2350. The target electrode 2350 may form at least a portion of the front face of the target unit 2300. The longitudinal direction of the target electrode 2350 may be parallel to the longitudinal direction of the neutron chamber body 2210 (see FIG. 21).

The target electrode 2350 may face the plasma chamber holder PCH (see FIG. 20). The target electrode 2350 may face the plasma extraction electrode 2123 (see FIG. 3).

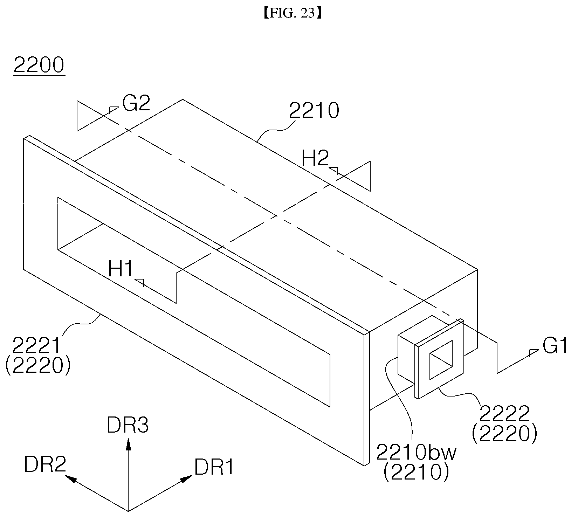

FIG. 23 illustrates a neutron chamber that is coupled to a plasma chamber holder illustrated in FIG. 20 and is directed toward a width direction of a neutron chamber mount port and a neutron generating device. For convenience of explanation, the neutron chamber vacuum cassette 2230 (see FIG. 10) may be omitted in FIG. 23.

FIG. 24 is a cross-sectional view of a neutron chamber illustrated in FIG. 23 taken along G1-G2. FIG. 25 is a cross-sectional view of a neutron chamber illustrated in FIG. 23 taken along H1-H2.

Referring to FIGS. 23 to 25, the neutron chamber 2200 may include the neutron chamber body 2210. The neutron chamber space 2212 may be formed as a hollow portion in the neutron chamber body 2210.

The neutron chamber inlet port 2210a may be an opening formed at a front end of the neutron chamber body 2210. The neutron chamber inlet port 2210a may be connected to or communicate with the neutron chamber space 2212.

The neutron chamber incident flange 2221 may be connected to or adjacent to the neutron chamber inlet port 2210a. The neutron chamber incident flange 2221 may surround the neutron chamber inlet port 2210a. For example, the neutron chamber incident flange 2221 may be formed along the perimeter of the neutron chamber inlet port 2210a.

The neutron chamber incident flange 2221 may extend or protrude radially from the front end portion of the neutron chamber body 2210 when using the longitudinal direction of the neutron chamber body 2210 as the axis.

For example, the neutron chamber incident flange 2221 may extend or protrude radially from the front end portion of the neutron chamber body 2210 when using the front-rear direction as the axis direction.

The neutron chamber 2200 may be coupled to the plasma chamber holder PCH (see FIG. 20). For example, the neutron chamber incident flange 2221 may be coupled to the plasma chamber holder PCH (see FIG. 20).

The longitudinal direction of the neutron chamber body 2210 may be parallel to the direction in which the neutron chamber 2200 and the plasma generation unit 2100 (see FIG. 20) are arranged. For example, the neutron chamber 2200 and the plasma generation unit 2100 (see FIG. 20) may be arranged in the longitudinal direction of the neutron chamber body 2210.

The neutron chamber mount port 2210b may be connected to or communicate with the neutron chamber space 2212. The neutron chamber mount port 2210b may be an opening formed on the side of the neutron chamber body 2210. For example, the neutron chamber mount port 2210b may face or be directed a width direction of the neutron chamber body 2210.

A plurality of neutron chamber mount ports 2210b may be provided. For example, the neutron chamber 2200 may include a first neutron chamber mount port 2210b1 and a second neutron chamber mount port 2210b2.

For example, the first neutron chamber mount port 2210b1 and the second neutron chamber mount port 2210b2 may face each other as openings formed in the neutron chamber body 2210. The first neutron chamber mount port 2210b1 and the second neutron chamber mount port 2210b2 may be located opposite each other.

The first neutron chamber mount port 2210b1 and the second neutron chamber mount port 2210b2 may be arranged in the width direction of the neutron chamber body 2210. The neutron chamber mount port 2210b may include or indicate at least one of the first neutron chamber mount port 2210b1 or the second neutron chamber mount port 2210b2.

The neutron chamber 2200 may include a neutron chamber mount wall 2210w that protrudes outward from the neutron chamber body 2210 in the neutron chamber mount port 2210b. The neutron chamber mount wall 2210w may extend in the width direction of the neutron chamber body 2210.

A plurality of neutron chamber mount walls 2210w may be provided. For example, the neutron chamber 2200 may include a first neutron chamber mount wall 2210w1 and a second neutron chamber mount wall 2210w2. The first neutron chamber mount wall 2210w1 and the second neutron chamber mount wall 2210w2 may be located opposite each other.

The first neutron chamber mount wall 2210w1 may extend or protrude outward from the neutron chamber body 2210 in the first neutron chamber mount port 2210b1.

The second neutron chamber mount wall 2210w2 may extend or protrude outward from the neutron chamber body 2210 in the second neutron chamber mount port 2210b2.

The neutron chamber mount wall 2210w may include or indicate at least one of the first neutron chamber mount wall 2210w1 or the second neutron chamber mount wall 2210w2.

The neutron chamber mount wall 2210w may form a hollow portion therein. The hollow portion formed in the neutron chamber mount wall 2210w may be connected to or communicate with the neutron chamber space 2212.

The neutron chamber 2200 may include a neutron chamber mount wall cap 2210wc. The neutron chamber mount wall cap 2210wc may be connected to an end portion of one of the plurality of neutron chamber mount walls 2210w.

For example, the neutron chamber mount wall cap 2210wc may be connected to an end portion of the second neutron chamber mount wall 2210w2. For example, the neutron chamber mount wall cap 2210wc may cover a hollow portion formed on the second neutron chamber mount wall 2210w2.

The neutron chamber mount flange 2222 may extend or protrude from the neutron chamber mount wall 2210w. For example, the neutron chamber mount flange 2222 may extend or protrude radially from the end portion of the neutron chamber mount wall 2210w when using the width direction of the neutron chamber body 2210 as the axis.

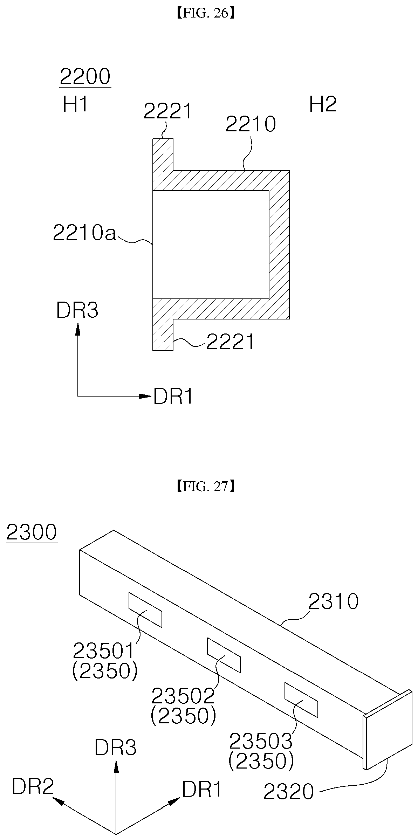

The neutron chamber mount flange 2222 may be coupled to the target unit 2300 (see FIG. 26). For example, the neutron chamber mount flange 2222 may be coupled to the target flange 2320 (see FIG. 26).

FIG. 26 illustrates a target unit that is coupled to a neutron chamber illustrated in FIG. 23 and includes a target electrode formed in an integrally elongated form. FIG. 27 illustrates a target unit that is coupled to a neutron chamber illustrated in FIG. 23 and includes a plurality of target electrodes.

Referring to FIGS. 26 and 27, the target unit 2300 may include the target body 2310 that is elongated or extended in the longitudinal direction. The longitudinal direction of the target body 2310 may be parallel to the width direction of the neutron chamber 2200 (see FIG. 23).

The target unit 2300 may include the target flange 2320 that extends or protrudes from the target body 2310. The target flange 2320 may extend or protrude radially from an end portion of the target body 2310 when using the longitudinal direction of the target body 2310 as the axis.

A process of coupling the target unit 2300 to the neutron chamber 2200 (see FIG. 23) is described. The other end portion of the target body 2310 may pass through the first neutron chamber mount wall 2210w1. The target unit 2300 may further proceed, and the other end portion of the target body 2310 may be accommodated in the second neutron chamber mount wall 2210w2, and an end portion of the target body 2310 may be accommodated in the first neutron chamber mount wall 2210w1. The target flange 2320 may be coupled to the neutron chamber mount flange 2222.

The other end portion of the target body 2310 may be supported by the second neutron chamber mount wall 2210w2, and the end portion of the target body 2310 may be supported by the first neutron chamber mount wall 2210w1.

The target unit 2300 may include the target electrode 2350. The target electrode 2350 may be coupled or connected to the target body 2310. The target electrode 2350 may face the plasma extraction electrode 2123 (see FIG. 3).

For example, as illustrated in FIG. 26, the target electrode 2350 may be elongated in the longitudinal direction of the target body 2310. For another example, as illustrated in FIG. 27, the plurality of target electrodes 2350 may be sequentially spaced apart from each other in the longitudinal direction of the target body 2310.

The number of the plurality of target electrodes 2350 may be equal to the number of the plurality of plasma generation units 2100 (see FIG. 20). For example, the plurality of target electrodes 2350 may include a first target electrode 23501, a second target electrode 23502, and a third target electrode 23503. The target electrode 2350 may include or indicate at least one of the first target electrode 23501, the second target electrode 23502, or the third target electrode 23503.

The first target electrode 23501 may face the plasma extraction electrode 2123 (see FIG. 3) of the first plasma generation unit 2101 (see FIG. 20). The second target electrode 23502 may face the plasma extraction electrode 2123 (see FIG. 3) of the second plasma generation unit 2102 (see FIG. 20). The third target electrode 23503 may face the plasma extraction electrode 2123 (see FIG. 3) of the third plasma generation unit 2103 (see FIG. 20).

As described above, the plurality of plasma generation units 2100 (see FIG. 20) may be provided, and the target unit 2300 may be formed corresponding to the plurality of plasma generation units 2100 (see FIG. 20). In this case, the target unit 2300 may have characteristics similar to a line source as a neutron source.

A neutron flux generated in the target unit 2300 may have a positive correlation with the power or beam current of the ion beam provided by the plasma generation unit 2100 (see FIG. 20).

The distribution of the neutron flux generated in the target unit 2300 may depend on the power (or beam current) of the plurality of plasma generation units 2100 (see FIG. 20).

In other words, the degree to which the neutron flux generated in the target unit 2300 is uniform along the longitudinal direction of the neutron chamber 2200 (see FIG. 21 and FIG. 23) may depend on the power (or beam current) of the plurality of plasma generation units 2100 (see FIG. 20).

For example, the power (or beam current) of the first plasma generation unit 2101 (see FIG. 20) may be equal to or substantially equal to the power (or beam current) of the third plasma generation unit 2103 (see FIG. 20). The power (or beam current) of the second plasma generation unit 2102 (see FIG. 20) may be less than the power (or beam current) of the first plasma generation unit 2101 (see FIG. 20).

When the power (or beam current) of the plurality of plasma generation units 2100 (see FIG. 20) is as described above, the distribution of the neutron flux generated in the target unit 2300 may be more uniform along the longitudinal direction of the neutron chamber 2200 (see FIG. 21 and FIG. 23).

FIG. 28 illustrates a neutron-induced gamma ray measurement system according to an embodiment of the present disclosure. For convenience of explanation, the support frame device 1000 (see FIG. 1) may be omitted in FIG. 28.

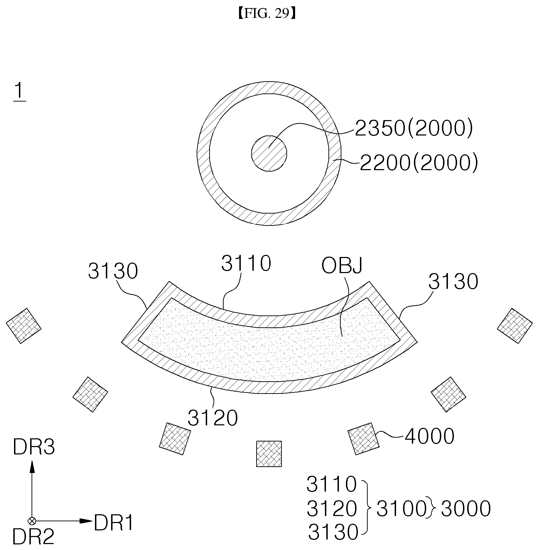

FIG. 29 is a cross-sectional view of a neutron-induced gamma ray measurement system illustrated in FIG. 28.

Referring to FIGS. 28 and 29, a neutron-induced gamma ray measurement system 1 may include the neutron generating device 2000, the object feeder 3000, and the measuring device 4000.

An object OBJ may include at least one of a powder or a fluid. The fluid may be at least one of liquid, gas, or a mixture of liquid and gas.

The object feeder 3000 may receive and transport the object OBJ. The object feeder 3000 may form the shape of a pipe. The object feeder 3000 may include, for example, a feeder pipe 3100. The feeder pipe 3100 may have the shape of a pipe and may receive and transport the object OBJ.

The feeder pipe 3100 may be divided based on sections. For example, the object feeder 3000 may include a lower feeder pipe 3100a, a ramp feeder pipe 3100b, and an upper feeder pipe 3100c. The feeder pipe 3100 may include or indicate at least one of the lower feeder pipe 3100a, the ramp feeder pipe 3100b, or the upper feeder pipe 3100c.

The lower feeder pipe 3100a may be extended or elongated horizontally. The lower feeder pipe 3100a may receive and transport the object OBJ. The lower feeder pipe 3100a may be located below the upper feeder pipe 3100c.

The ramp feeder pipe 3100b may be slantly extended upward from an end portion of the lower feeder pipe 3100a and connected to the upper feeder pipe 3100c.

The upper feeder pipe 3100c may be extended or elongated horizontally. The upper feeder pipe 3100c may receive and transport the object OBJ. The upper feeder pipe 3100c may be extended horizontally from an end portion of the ramp feeder pipe 3100b. The upper feeder pipe 3100c may be located below the neutron generating device 2000.

The feeder pipe 3100 may include an inner pipe panel 3110. The inner pipe panel 3110 may form an upper face of the feeder pipe 3100.

The inner pipe panel 3110 of the upper feeder pipe 3100c may be located below the neutron generating device 2000 and may face the neutron generating device 2000.

The inner pipe panel 3110 may be concave upward. For example, the inner pipe panel 3110 may be concave toward the neutron generating device 2000. For example, when viewing the upper feeder pipe 3100c from the neutron generating device 2000, the inner pipe panel 3110 of the upper feeder pipe 3100c may be concave.

The inner pipe panel 3110 may form the shape of a curved panel or a curved plate. An upper face of the inner pipe panel 3110 may be concave. A lower face of the inner pipe panel 3110 may be convex.

The feeder pipe 3100 may include an outer pipe panel 3120. The outer pipe panel 3120 may form a lower face of the feeder pipe 3100. The outer pipe panel 3120 may be located below the inner pipe panel 3110. The outer pipe panel 3120 may be convex downward.

The outer pipe panel 3120 may form the shape of a curved panel or a curved plate. An upper face of the outer pipe panel 3120 may be concave. The upper face of the outer pipe panel 3120 may face the lower face of the inner pipe panel 3110. A lower face of the outer pipe panel 3120 may be convex.

The inner pipe panel 3110 may be arranged between the neutron generating device 2000 and the outer pipe panel 3120. The outer pipe panel 3120 may be concave toward the inner pipe panel 3110.

The feeder pipe 3100 may include a side pipe panel 3130. The side pipe panel 3130 may connect the outer pipe panel 3120 and the inner pipe panel 3110.

The side pipe panel 3130 may extend from the outer pipe panel 3120 and lead to the inner pipe panel 3110. A "virtual extension line" (not shown) extending from the side pipe panel 3130 in the direction in which the side pipe panel 3130 extends may meet the neutron generating device 2000.

For example, the "virtual extension line" (not shown) extending from the side pipe panel 3130 in the direction in which the side pipe panel 3130 extends may meet the target electrode 2350 of the neutron generating device 2000.

A cross-sectional surface of the feeder pipe 3100 may include the shape of a circular arc. The cross-sectional surface of the feeder pipe 3100 may be set based on a longitudinal direction of the feeder pipe 3100.

For example, at least a portion of a cross-sectional surface of the inner pipe panel 3110 may form the shape of a circular arc. For example, the cross-sectional surface of the inner pipe panel 3110 may form a portion of a circle centered on the target electrode 2350.

For example, at least a portion of a cross-sectional surface of the outer pipe panel 3120 may form the shape of a circular arc. For example, the cross-sectional surface of the outer pipe panel 3120 may form a portion of a circle centered on the target electrode 2350.

As the feeder pipe 3100 forms the shape illustrated in FIG. 29, the distribution of neutrons incident into the feeder pipe 3100 can be made more uniform. As a result, the measurement of the object OBJ can be made more accurate.

The object feeder 3000 may include a feeder pusher 3200. The feeder pusher 3200 may be connected to, coupled to, or installed on the feeder pipe 3100. For example, the feeder pusher 3200 may be connected to, coupled to, or installed on the lower feeder pipe 3100a.

The feeder pusher 3200 may push the object OBJ. For example, the feeder pusher 3200 may push the object OBJ from the feeder pipe 3100. When the feeder pusher 3200 pushes the object OBJ, the object OBJ may be transported from the feeder pipe 3100.

A direction in which the object OBJ is transported from the feeder pipe 3100 may be a direction from the lower feeder pipe 3100a toward the ramp feeder pipe 3100b. The direction in which the object OBJ is transported from the feeder pipe 3100 may be a direction from the ramp feeder pipe 3100b toward the upper feeder pipe 3100c.

The feeder pusher 3200 may include a screw. The feeder pusher 3200 including the screw can effectively push the object OBJ including a powder. When the screw of the feeder pusher 3200 rotates, the object OBJ including the powder may move.

The feeder pusher 3200 including the screw may be connected to, coupled to, or installed on the lower feeder pipe 3100a. In this case, at least a portion of an inner space of the lower feeder pipe 3100a may be in the shape of a cylinder.

The feeder pusher 3200 may include a gear pump. The feeder pusher 3200 including the gear pump can effectively push the object OBJ including a fluid.

When the gear pump rotates, the object OBJ including the fluid may move. When the gear pump does not rotate, the movement of the object OBJ including the fluid can be suppressed.

The feeder pusher 3200 may include a driver. For example, the feeder pusher 3200 may include a motor. The motor of the feeder pusher 3200 may be coupled to the screw or the gear pump to provide a rotational force.

When the feeder pusher 3200 is operated, the object OBJ located in the lower feeder pipe 3100a may move toward the ramp feeder pipe 3100b, the object OBJ located in the ramp feeder pipe 3100b may move toward the upper feeder pipe 3100c, and the object OBJ located in the upper feeder pipe 3100c may move from the upper feeder pipe 3100c or be discharged to the outside.

The possibility that air in the feeder pipe 3100 will be mixed with the object OBJ may be considered. If air is located inside the feeder pipe 3100, it may be a factor of noise in the measurement for analyzing the components of the object OBJ.

The object feeder 3000 may include an air remover 3400. For example, the air remover 3400 may be located on an upper end portion of the ramp feeder pipe 3100b. For example, the air remover 3400 may be adjacent to a boundary between the ramp feeder pipe 3100b and the upper feeder pipe 3100c.

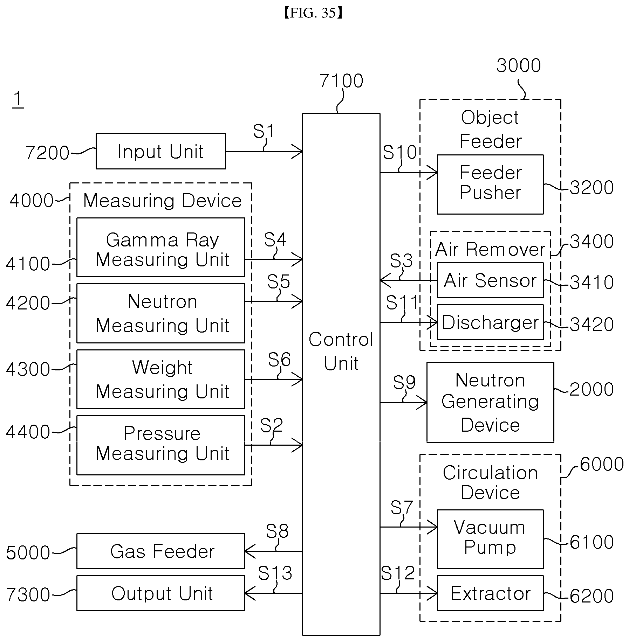

The air remover 3400 may include an air sensor 3410 (see FIG. 35). At least a portion of the air sensor 3410 (see FIG. 35) may be located inside the feeder pipe 3100.

The air sensor 3410 (see FIG. 35) may detect air inside the feeder pipe 3100. For example, the air sensor 3410 (see FIG. 35) may include at least one of a light sensor, a proximity sensor, or an ultrasonic sensor.

The air remover 3400 may include a discharger 3420 (see FIG. 35). At least a portion of the discharger 3420 (see FIG. 35) may be connected or coupled to the feeder pipe 3100.

For example, the discharger 3420 (see FIG. 35) may include a valve connected to the feeder pipe 3100. When the valve of the discharger 3420 (see FIG. 35) is opened, the inside and outside of the feeder pipe 3100 may communicate with each other. When the valve of the discharger 3420 (see FIG. 35) is closed, the inside and outside of the feeder pipe 3100 may be blocked.

When air is detected by the air sensor 3410 (see FIG. 35), a control unit 7100 (see FIG. 35) may send a signal to the discharger 3420 (see FIG. 35), and the valve of the discharger 3420 (see FIG. 35) receiving the signal may be opened. When the control unit 7100 (see FIG. 35) sends the signal to the feeder pusher 3200 to operate the feeder pusher 3200, the object OBJ may move and may discharge air in the feeder pipe 3100. The control unit 7100 (see FIG. 35) may send a signal to the discharger 3420 (see FIG. 35), and the valve of the discharger 3420 (see FIG. 35) receiving the signal may be closed.

The neutron-induced gamma ray measurement system 1 may include the measuring device 4000. Neutrons generated from the neutron generating device 2000 may be incident on the upper feeder pipe 3100c. The neutrons incident on the upper feeder pipe 3100c may pass through the upper feeder pipe 3100c and may be incident on the object OBJ.

When the neutron collides with particles of the object OBJ, at least a portion of the kinetic energy of the neutron may be transferred to the particle of the object OBJ. At least a portion of the kinetic energy transferred to the particle of the object OBJ may allow the particle of the object OBJ to be an excited state.

The particle in the excited state may be a particle in a ground state again. In this process, the energy of the particle is lowered and gamma rays may be generated.

The energy of the generated gamma rays may vary depending on an element (or nuclide) of the particle colliding with the neutron. A measured amount (count) of the generated gamma rays may vary depending on the number of elements (or nuclides) of the particle colliding with the neutron.

Thus, as the neutron generating device 2000 provides the neutrons to the object OBJ and measures the gamma rays generated from the object OBJ, information on an elemental ratio of the object OBJ can be derived.

The measuring device 4000 may include a gamma ray measuring unit 4100 (see FIG. 35). The gamma ray measuring unit 4100 (see FIG. 35) may be adjacent to or in contact with the feeder pipe 3100. The gamma ray measuring unit 4100 (see FIG. 35) may be adjacent to or in contact with the neutron generating device 2000.

The gamma ray measuring unit 4100 (see FIG. 35) may measure at least a portion of the gamma rays incident on the gamma ray measuring unit 4100 (see FIG. 35). A plurality of gamma ray measuring units 4100 (see FIG. 35) may be provided.

The gamma ray measuring unit 4100 (see FIG. 35) may measure gamma rays in a state where the object OBJ is not in the feeder pipe 3100 and the neutron generating device 2000 operates in a steady state. In this case, data on the gamma rays measured by the gamma ray measuring unit 4100 (see FIG. 35) may be referred to as "reference gamma ray data."

The gamma ray measuring unit 4100 (see FIG. 35) may measure gamma rays in a state where the object OBJ is located in the feeder pipe 3100 and the neutron generating device 2000 operates in a steady state. In this instance, data on the gamma rays measured by the gamma ray measuring unit 4100 (see FIG. 35) may be referred to as "measured gamma ray data".

The gamma rays related to the measured gamma ray data may include gamma rays generated from the neutron-induced gamma ray measurement system 1 in addition to the object OBJ. Therefore, the reference gamma ray data may be used to extract information on the gamma rays generated from the object OBJ.

Data on the gamma rays generated from the object OBJ may be extracted by offsetting the measured gamma ray data using the reference gamma ray data. In this context, the data on the gamma rays generated from the object OBJ may be referred to as "corrected gamma ray data" or "object gamma ray data."

The measuring device 4000 may include a neutron measuring unit 4200 (see FIG. 35). A plurality of neutron measuring units 4200 (see FIG. 35) may be provided. At least a portion of the neutron measuring unit 4200 (see FIG. 35) may be located below the feeder pipe 3100. At least a portion of the neutron measuring unit 4200 (see FIG. 35) may be located next to the feeder pipe 3100 and face the neutron generating device 2000.

At least some of the neutrons incident on the feeder pipe 3100 may collide with the particles of the object OBJ. At least some of the neutrons colliding with the particles of the object OBJ may move outward from the outer pipe panel 3120.

The neutron measuring unit 4200 (see FIG. 35) may measure neutrons incident on the neutron measuring unit 4200 (see FIG. 35). Through the plurality of neutron measuring units 4200 (see FIG. 35), the number of neutrons that are incident on the feeder pipe 3100 and collide with the object OBJ may be estimated.

The measuring device 4000 may include a weight measuring unit 4300 (see FIG. 35). The weight measuring unit 4300 (see FIG. 35) may be connected to or in contact with the feeder pipe 3100. The weight measuring unit 4300 (see FIG. 35) may measure the weight of the object OBJ that the gamma ray measuring unit 4100 (see FIG. 35) intends to measure.

For example, the weight measuring unit 4300 (see FIG. 35) may include a load cell. For example, the weight measuring unit 4300 (see FIG. 35) may include a plurality of load cells. Based on information on the weight and elemental distribution of the object OBJ to be measured, information on an amount for each element of the object OBJ to be measured may be extracted.

The measuring device 4000 may include a pressure measuring unit 4400 (see FIG. 35). The pressure measuring unit 4400 (see FIG. 35) may be connected or coupled to the neutron chamber 2200 (see FIGS. 9, 21, and 23) of the neutron generating device 2000.

The pressure measuring unit 4400 (see FIG. 35) may measure an internal pressure of the neutron chamber 2200 (see FIGS. 9, 21, and 23) of the neutron generating device 2000. The internal pressure of the neutron chamber 2200 (see FIGS. 9, 21, and 23) may be substantially the same as an internal pressure of the plasma chamber space 2112 (see FIG. 3).

The internal pressure of the neutron chamber 2200 (see FIGS. 9, 21, and 23) may be part of plasma generation conditions. The internal pressure of the neutron chamber 2200 (see FIGS. 9, 21, and 23) may be lower than the atmospheric pressure.

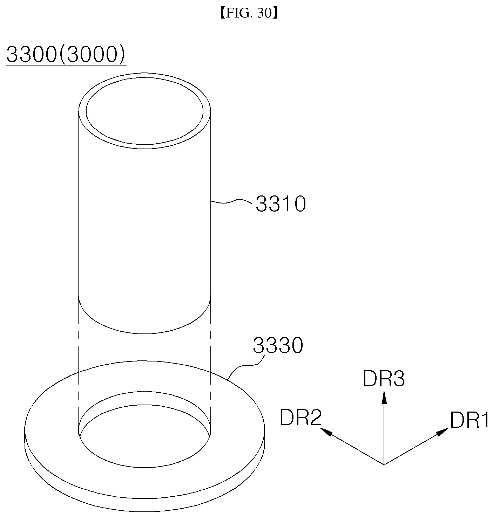

FIG. 30 illustrates a feeder cabinet including an inner cabinet wall and a cabinet bottom. FIG. 30 may be an exploded perspective view of a feeder cabinet.

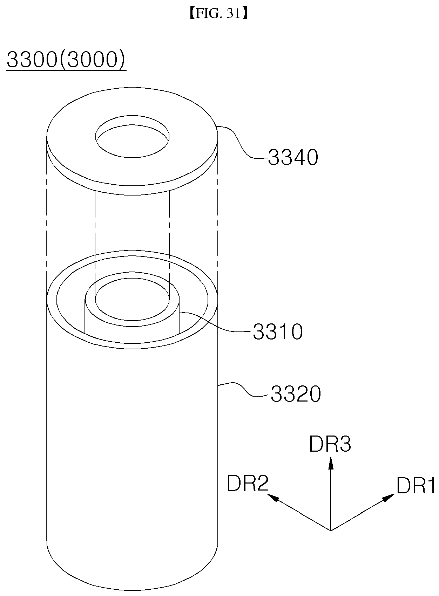

FIG. 31 illustrates that an outer cabinet wall and a cabinet top are added to a feeder cabinet illustrated in FIG. 30. FIG. 31 may be an exploded perspective view of a feeder cabinet.

Referring to FIGS. 30 and 31, the object feeder 3000 may include a feeder cabinet 3300. The feeder cabinet 3300 may form the shape of a pipe forming a hollow portion. For example, the hollow portion formed in the feeder cabinet 3300 may be open upward and downward.

The feeder cabinet 3300 may include an inner cabinet wall 3310. The inner cabinet wall 3310 may have the shape of a pipe. For example, the inner cabinet wall 3310 may form a hollow portion therein. The hollow portion formed in the inner cabinet wall 3310 may be open upward and downward. The inner cabinet wall 3310 may extend upward from an lower end and lead to an upper end.

The feeder cabinet 3300 may include an outer cabinet wall 3320. The outer cabinet wall 3320 may have the shape of a pipe. For example, the outer cabinet wall 3320 may form a hollow portion therein. The hollow portion formed in the outer cabinet wall 3320 may be open upward and downward.

The inner cabinet wall 3310 may be arranged in the hollow portion formed in the outer cabinet wall 3320. In other words, the outer cabinet wall 3320 may be formed along an outer surface of the inner cabinet wall 3310 and may be spaced apart from the inner cabinet wall 3310.

The feeder cabinet 3300 may include a cabinet bottom 3330. The cabinet bottom 3330 may form the shape of a plate or a disc. An opening may be formed in the cabinet bottom 3330.

The cabinet bottom 3330 may be coupled or connected to the outer cabinet wall 3320. For example, the outer cabinet wall 3320 may form a shape extending upward from a perimeter of the cabinet bottom 3330. For example, a lower end portion of the outer cabinet wall 3320 may be coupled or connected to the perimeter of the cabinet bottom 3330.

The cabinet bottom 3330 may be coupled or connected to the inner cabinet wall 3310. For example, the inner cabinet wall 3310 may form a shape extending upward from the opening of the cabinet bottom 3330. For example, a lower end portion of the inner cabinet wall 3310 may be coupled or connected to the opening of the cabinet bottom 3330.

For example, the cabinet bottom 3330 may extend from the lower end of the inner cabinet wall 3310 and lead to the lower end of the outer cabinet wall 3320.

The feeder cabinet 3300 may include a cabinet top 3340. The cabinet top 3340 may form the shape of a plate or a disc. An opening may be formed in the cabinet top 3340.

The cabinet top 3340 may be coupled or connected to the outer cabinet wall 3320. For example, the outer cabinet wall 3320 may form a shape extending downward from a perimeter of the cabinet top 3340. For example, an upper end portion of the outer cabinet wall 3320 may be coupled or connected to the perimeter of the cabinet top 3340.

The cabinet top 3340 may be coupled or connected to the inner cabinet wall 3310. For example, the inner cabinet wall 3310 may form a shape extending downward from the opening of the cabinet top 3340. For example, an upper end portion of the inner cabinet wall 3310 may be coupled or connected to the opening of the cabinet top 3340.

For example, the cabinet top 3340 may extend from the upper end of the inner cabinet wall 3310 and lead to the upper end of the outer cabinet wall 3320.

The feeder cabinet 3300 may accommodate the object OBJ (see FIG. 29). For example, the object OBJ (see FIG. 29) may be located between the inner cabinet wall 3310 and the outer cabinet wall 3320 and accommodated in the feeder cabinet 3300. For example, the object OBJ (see FIG. 29) may be located between the cabinet bottom 3330 and the cabinet top 3340 and accommodated in the feeder cabinet 3300.

FIG. 32 illustrates a neutron-induced gamma ray measurement system in which a neutron generating device is coupled to a feeder cabinet and a measuring device is arranged on the feeder cabinet.

Referring to FIGS. 30 to 32, the neutron generating device 2000 may be inserted into the hollow portion formed in the inner cabinet wall 3310. The neutron generating device 2000 may be a line source elongated in the up-down direction as a neutron source illustrated in FIGS. 19 to 27.

The plurality of neutron generating devices 2000 may be provided.

For example, a first neutron generating device 2001 and a second neutron generating device 2002 may be inserted into the hollow portion formed in the inner cabinet wall 3310. The first neutron generating device 2001 may be positioned above the second neutron generating device 2002.

In this context, the first neutron generating device 2001 may be referred to as an "upper neutron generating device," and the second neutron generating device 2002 may be referred to as a "lower neutron generating device."

The measuring device 4000 may be arranged outside the outer cabinet wall 3320. For example, the plurality of gamma ray measuring units 4100 (see FIG. 35) may be arranged in a circumferential direction or an azimuth direction when using a longitudinal direction of the feeder cabinet 3300 as the axis. The longitudinal direction of the feeder cabinet 3300 may be parallel to a direction in which the first neutron generating device 2001 and the second neutron generating device 2002 are arranged.

The neutron generating device 2000 may include or indicate at least one of the first neutron generating device 2001 or the second neutron generating device 2002. The neutrons generated from the neutron generating device 2000 may be incident on the inner cabinet wall 3310.

At least some of the neutrons incident on the inner cabinet wall 3310 may pass through the inner cabinet wall 3310 and may be incident on the object OBJ (see FIG. 29). At least some of the neutrons incident on the object OBJ (see FIG. 29) may collide with the particles of the object OBJ (see FIG. 29).

Gamma rays may be generated in this process. The gamma ray measuring unit 4100 (see FIG. 35) of the measuring device 4000 may measure the gamma rays.

A method of measuring components of the object OBJ (see FIG. 29) using the feeder cabinet 3300 may be more economical in terms of neutron utilization, compared to a method of measuring components of the object OBJ (see FIG. 29) using the feeder pipe 3100 (see FIGS. 28 and 29).

The object feeder 3000 may include a feeder inlet 3510. The object OBJ (see FIG. 29) may be fed into the inside of the feeder cabinet 3300 through the feeder inlet 3510. The feeder inlet 3510 may form the shape of a pipe or a hose.

The feeder inlet 3510 may be formed on, connected to, or coupled to the cabinet top 3340. The feeder inlet 3510 may be formed on, connected to, or coupled to the upper end portion of the inner cabinet wall 3310 or the upper end portion of the outer cabinet wall 3320.

The object feeder 3000 may include a feeder outlet 3520. The object OBJ (see FIG. 29) may be discharged to the outside of the feeder cabinet 3300 through the feeder outlet 3520. The feeder outlet 3520 may form the shape of a pipe or a hose.

The feeder outlet 3520 may be formed on, connected to, or coupled to the cabinet bottom 3330. The feeder outlet 3520 may be formed on, connected to, or coupled to the lower end portion of the inner cabinet wall 3310 or the lower end portion of the outer cabinet wall 3320.

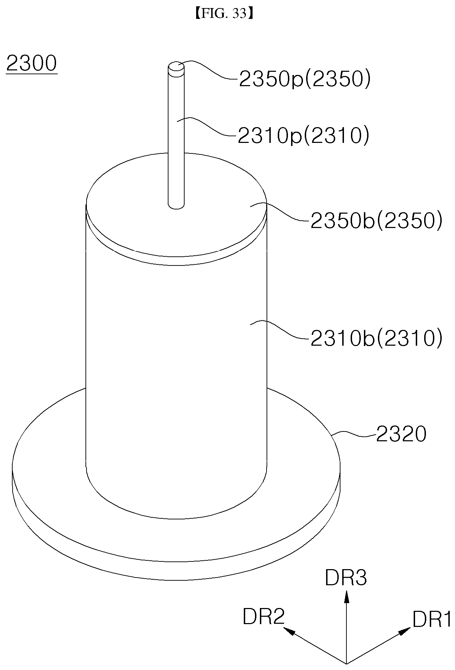

FIG. 33 illustrates a target unit including a stepped target body.

Referring to FIG. 33, the target body 2310 may be coupled to the target flange 2320. For example, the target flange 2320 may be coupled to an end of the target body 2310. The target body 2310 may form a shape that extends from an end and leads to another end. The longitudinal direction of the target body 2310 may be parallel to a direction from the end to the other end of the target body 2310.

The target body 2310 may form a step. For example, the target body 2310 may form a step along the longitudinal direction of the target body 2310. For example, the target unit 2300 may include a target body base 2310b and a target body protrusion 2310p. The target body 2310 may include or indicate at least one of the target body base 2310b or the target body protrusion 2310p.

The target body base 2310b may be coupled to the target flange 2320. For example, the target flange 2320 may be coupled to an end of the target body base 2310b. The target body base 2310b may extend from an end and lead to another end. A longitudinal direction of the target body base 2310b may be parallel to a direction from the end to the other end of the target body base 2310b.

The target body protrusion 2310p may be connected or coupled to the target body base 2310b. For example, the target body base 2310b may be connected or coupled to an end of the target body protrusion 2310p. The target body protrusion 2310p may extend from an end and lead to another other. A longitudinal direction of the target body protrusion 2310p may be parallel to the longitudinal direction of the target body base 2310b.

For example, the target body protrusion 2310p may protrude or extend from the target body base 2310b in the direction in which the target body base 2310b extends from the target flange 2320. That is, the target body base 2310b may be arranged between the target flange 2320 and the target body protrusion 2310p.

Each of the target body base 2310b and the target body protrusion 2310p may have a cylindrical shape. For example, a side face of the target body base 2310b and a side face of the target body protrusion 2310p may each have a cylinder shape.

The target body base 2310b and the target flange 2320 may be coaxial. The target body protrusion 2310p and the target body base 2310b may be coaxial. An outer radius of the target body base 2310b may be greater than an outer radius of the target body protrusion 2310p.

The plurality of target electrodes 2350 may be provided. For example, the target unit 2300 may include a base target electrode 2350b and a protrusion target electrode 2350p. The target electrode 2350 may include or indicate at least one of the base target electrode 2350b or the protrusion target electrode 2350p.

The base target electrode 2350b may face the plasma extraction electrode 2123 (see FIG. 3). The base target electrode 2350b may form the shape of a disc that forms an opening. For example, the base target electrode 2350b may form a shape covering the end portion of the target body protrusion 2310p. The base target electrode 2350b may be coupled or connected to the other end of the target body base 2310b.

The protrusion target electrode 2350p may face the plasma extraction electrode 2123 (see FIG. 3). The protrusion target electrode 2350p may form the shape of a disc. For example, the protrusion target electrode 2350p may be coupled or connected to the other end of the target body protrusion 2310p.

The protrusion target electrode 2350p and the base target electrode 2350b may be spaced apart from each other along the longitudinal direction of the target body 2310. When an ion beam is incident on the base target electrode 2350b and the protrusion target electrode 2350p, neutrons may be generated.

Accordingly, the target unit 2300 including the base target electrode 2350b and the protrusion target electrode 2350p may have characteristics similar to the line source as the neutron source. The neutron generating device 2000 (see FIG. 32) including the target unit 2300 illustrated in FIG. 33 may be inserted into the feeder cabinet 3300.

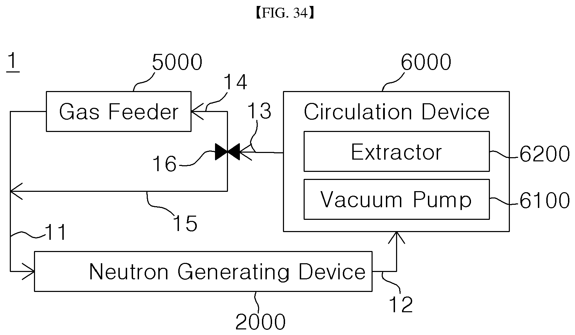

FIG. 34 illustrates a neutron-induced gamma ray measurement system including a gas feeder and a circulation device.

Referring to FIG. 34, the neutron-induced gamma ray measurement system 1 may include the gas feeder 5000. The gas feeder 5000 may provide a gas, which serves as a material of the plasma, to the neutron generating device 2000. The gas provided by the gas feeder 5000 to the neutron generating device 2000 may be referred to as a "plasma material gas."

A first gas line 11 may connect the gas feeder 5000 and the neutron generating device 2000. For example, an end of the first gas line 11 may be connected to the gas feeder 5000, and another end of the first gas line 11 may be connected to the gas inlet 2150 (see FIG. 3). The first gas line 11 may provide the plasma material gas to the neutron generating device 2000.

The neutron-induced gamma ray measurement system 1 may include the circulation device 6000. The circulation device 6000 may include a vacuum pump 6100. When the vacuum pump 6100 operates, an internal pressure of the neutron chamber 2200 (see FIG. 9) may be lowered.

The vacuum pump 6100 may be connected to the neutron generating device 2000. For example, the vacuum pump 6100 may be connected to the neutron chamber 2200 (see FIG. 9) of the neutron generating device 2000 through the second gas line 12.

For example, an end of the second gas line 12 may be connected to the vacuum pump 6100, and another end of the second gas line 12 may be connected or coupled to the neutron chamber vacuum cassette 2230 (see FIGS. 9 and 21).

The gas discharged from the neutron generating device 2000 to the second gas line 12 may include a material generated in the nuclear fusion reaction. In this sense, the gas discharged from the neutron generating device 2000 to the second gas line 12 may be referred to as a "byproduct gas."

The circulation device 6000 may include an extractor 6200. The extractor 6200 may extract a useful material from the gas sucked from the neutron chamber 2200 (see FIG. 9). The "useful material" may include a material required for the nuclear fusion reaction. For example, the "useful material" may include deuterium or include tritium. In this sense, the "useful material" may be referred to as a "nuclear fusion reaction material."

The nuclear fusion reaction material extracted from the extractor 6200 may be provided to the neutron generating device 2000. The circulation device 6000 may be connected to a third gas line 13. The nuclear fusion reaction material extracted from the extractor 6200 may be provided to the third gas line 13.

An end of the third gas line 13 may be connected or coupled to the circulation device 6000. Another end of the third gas line 13 may be connected or coupled to a gas distributor 16.

A fourth gas line 14 may connect the gas feeder 5000 and the gas distributor 16. A fifth gas line 15 may connect the first gas line 11 and the gas distributor 16.

The gas distributor 16 may open and close the fourth gas line 14 and the fifth gas line 15. That is, the nuclear fusion reaction material provided to the third gas line 13 may be delivered to the gas feeder 5000 through the fourth gas line 14 or directly delivered to the neutron generating device 2000 through the fifth gas line 15.

A plurality of gas feeders 5000 may be provided. For example, the plurality of gas feeders 5000 may provide different gases to the neutron generating device 2000. For example, one of the plurality of gas feeders 5000 may include a gas bomb accommodating a gas including deuterium or tritium. For example, another of the plurality of gas feeders 5000 may deliver the nuclear fusion reaction material received from the extractor 6200 through the fourth gas line 14 to the neutron generating device 2000.

FIG. 35 is a block diagram illustrating a neutron-induced gamma ray measurement system according to an embodiment of the present disclosure.

Referring to FIGS. 1 to 35, the neutron-induced gamma ray measurement system 1 may include the control unit 7100. The control unit 7100 may receive and transmit signals. The signals received or transmitted by the control unit 7100 may be electrical signals.

The control unit 7100 may perform calculations. For example, the control unit 7100 may determine information included in the signal and generate a signal including new information based on an algorithm. For example, the new signal generated by the control unit 7100 may include information for the operation of the neutron-induced gamma ray measurement system 1.

For example, the control unit 7100 may be implemented through at least one of a computer, a server, a processor, a circuit board, or a laptop. The circuit board may include, for example, a printed circuit board (PCB).

The neutron-induced gamma ray measurement system 1 may include an input unit 7200. The input unit 7200 may acquire an input from a user, etc. The input unit 7200 may transmit a first signal S1 to the control unit 7100. The first signal S1 may include command information related to the operation of the neutron-induced gamma ray measurement system 1.

The measuring device 4000 may include the pressure measuring unit 4400. The pressure measuring unit 4400 may transmit a second signal S2 to the control unit 7100. The second signal S2 may include information on the internal pressure of the neutron chamber 2200.

The air remover 3400 may include the air sensor 3410. The air sensor 3410 may generate a third signal S3. The third signal S3 may include information about air (or empty space) located inside the feeder pipe 3100. The air sensor 3410 may transmit the third signal S3 to the control unit 7100.

The measuring device 4000 may include the gamma ray measuring unit 4100. The gamma ray measuring unit 4100 may generate a fourth signal S4 and transmit the fourth signal S4 to the control unit 7100. The fourth signal S4 may include information on gamma rays incident on the gamma ray measuring unit 4100.

The measuring device 4000 may include the neutron measuring unit 4200. The neutron measuring unit 4200 may generate a fifth signal S5 and transmit the fifth signal S5 to the control unit 7100. The fifth signal S5 may include information on neutrons incident on the neutron measuring unit 4200.

The measuring device 4000 may include the weight measuring unit 4300. The weight measuring unit 4300 may generate a sixth signal S6 and transmit the sixth signal S6 to the control unit 7100. The sixth signal S6 may include weight information measured by the weight measuring unit 4300. The weight information measured by the weight measuring unit 4300 may include information on a weight of the object OBJ that the gamma ray measuring unit 4100 intends to measure among the objects OBJ.

The input signals S1, S2, S3, S4, S5, and S6 may include at least one of the first signal S1, the second signal S2, the third signal S3, the fourth signal S4, the fifth signal S5, or the sixth signal S6.

Output signals S7, S8, S9, S10, S11, S12, and S13 may include at least one of a seventh signal S7, an eighth signal S8, a ninth signal S9, a tenth signal S10, an eleventh signal S11, a twelfth signal S12, or a thirteenth signal S13.

The control unit 7100 may generate the output signals S7, S8, S9, S10, S11, S12, and S13 from the input signals S1, S2, S3, S4, S5, and S6.

The control unit 7100 may transmit the seventh signal S7 to the vacuum pump 6100. The seventh signal S7 may include information about the operation of the vacuum pump 6100. For example, the seventh signal S7 may include information including whether the vacuum pump 6100 operates, the output of the vacuum pump 6100, etc. When the vacuum pump 6100 receives the seventh signal S7, the vacuum pump 6100 may operate in response to the seventh signal S7.

The control unit 7100 may transmit the eighth signal S8 to the gas feeder 5000. The eighth signal S8 may include information about the operation of the gas feeder 5000. For example, the eighth signal S8 may include information including whether gas is injected from the gas feeder 5000 to the neutron generating device 2000, a type of the injected gas, a flow rate of the injected gas, etc. The gas feeder 5000 may operate in response to the eighth signal S8.

The control unit 7100 may transmit the ninth signal S9 to the neutron generating device 2000. The ninth signal S9 may include information including the electric potential of the plasma electrode 2120, the electric potential of the plasma extraction electrode 2123, and the electric potential of the target electrode 2350, etc. The neutron generating device 2000 may operate in response to the ninth signal S9.

The control unit 7100 may transmit the tenth signal S10 to the feeder pusher 3200. The tenth signal S10 may include information including whether the feeder pusher 3200 operates, a flow rate of the object OBJ pushed by the feeder pusher 3200, etc. The feeder pusher 3200 may operate in response to the tenth signal S10.

The control unit 7100 may transmit the eleventh signal S11 to the discharger 3420. The eleventh signal S11 may include information about the operation of the discharger 3420. The discharger 3420 may operate in response to the eleventh signal S11.

The control unit 7100 may transmit the twelfth signal S12 to the extractor 6200. The twelfth signal S12 may include at least one of information about whether to deliver the nuclear fusion reaction material to the gas feeder 5000 and information about a type of the nuclear fusion reaction material delivered to the gas feeder 5000. The extractor 6200 may operate in response to the twelfth signal S12.

The neutron-induced gamma ray measurement system 1 may include an output unit 7300. The output unit 7300 may display the received signal or output it as sound.

The control unit 7100 may transmit the thirteenth signal S13 to the output unit 7300. The thirteenth signal S13 may include information including a state of the neutron-induced gamma ray measurement system 1, etc. The output unit 7300 may display the information included in the thirteenth signal S13 as images or sound.

The neutron-induced gamma ray measurement system 1 may include a communication unit (not shown). The communication unit (not shown) may communicate with an external device and may be connected to the control unit 7100.

For example, the communication unit (not shown) may be connected to the input unit 7200 and/or the output unit 7300. As another example, the input unit 7200 and the output unit 7300 may form the communication unit (not shown). In other words, the communication unit (7200, 7300) may include at least one of the input unit 7200 or the output unit 7300.

In this case, the control unit 7100 may receive a command input related to the operation of the neutron-induced gamma ray measurement system 1 through the communication unit (not shown). Alternatively, the control unit 7100 may transmit information on the state of the neutron-induced gamma ray measurement system 1 to the external device through the communication unit (not shown).

Referring to FIGS. 1 to 35, the target electrode 2350 may be elongated along one direction as illustrated in FIG. 22 or FIG. 26. For example, the target electrode 2350 may be elongated along the width direction of the neutron chamber 2200.

The shape of the beam bender chamber 2410 illustrated in FIG. 17 may be modified so that it can be coupled to the neutron chamber 2200 illustrated in FIG. 21 or FIG. 23. The beam bender magnet 2420 may form a distribution of different magnetic fluxes 2423 along the width direction of the beam bender chamber 2410.

For example, the intensity of the magnetic flux 2423 may increase as the beam bender chamber 2410 goes toward the bending direction. In this case, multiple particles of the particle beam may be distributed along the longitudinal direction of the target electrode 2350 and may be incident on the target electrode 2350.

Accordingly, even if the plasma generation unit 2100 is provided as a single unit, the target unit 2300 can be a line source as a neutron source.

Some embodiments or other embodiments of the present disclosure described above are not mutually exclusive or distinct from each other. Configurations or functions of some embodiments or other embodiments of the present disclosure described above can be used together or combined with each other.

It is apparent to those skilled in the art that the present disclosure can be embodied in other specific forms without departing from the spirit and essential features of the present disclosure. Accordingly, the above detailed description should not be construed as limiting in all aspects and should be considered as illustrative. The scope of the present disclosure should be determined by rational interpretation of the appended claims, and all modifications within an equivalent scope of the present disclosure are included in the scope of the present disclosure.

## Claims

1. A neutron generating device comprising:
a plasma generation unit forming a plasma and extracting an ion beam;
a neutron chamber which is coupled to a rear end of the plasma generation unit and receives the ion beam from the plasma generation unit; and
a target unit coupled to the neutron chamber, the ion beam being incident on the target unit in a longitudinal direction,
wherein the target unit includes:
a target flange coupled to the neutron chamber;
a target body that extends from the target flange and is elongated in a transverse direction; and
a target electrode that is coupled to the target body and faces the plasma generation unit.

2. The neutron generating device of claim 1, wherein at least some of particles included in the ion beam are incident on the target electrode to undergo a nuclear fusion reaction.

3. The neutron generating device of claim 2, wherein when the nuclear fusion reaction occurs, neutrons are generated.

4. The neutron generating device of claim 1, wherein the target unit further includes a cooling hose that flows a coolant and exchanges heat with the target electrode.

5. The neutron generating device of claim 1, wherein the target electrode includes:
a target electrode body, that is coupled to the target body, faces the plasma generation unit, and is elongated in the transverse direction; and
a target electrode flow passage formed in the target electrode body.

6. The neutron generating device of claim 5, wherein the target unit includes:
a cooling injection hose providing a coolant to the target electrode flow passage; and
a cooling discharge hose receiving the coolant from the target electrode flow passage.

7. The neutron generating device of claim 1, wherein the neutron chamber includes:
a neutron chamber body forming a hollow portion;
a neutron chamber incident flange that is coupled to a front end portion of the neutron chamber body and is coupled to the rear end of the plasma generation unit; and
a neutron chamber mount flange that is coupled to the neutron chamber body and is coupled to the target flange.

8. The neutron generating device of claim 7, wherein the neutron chamber mount flange is coupled to a rear end portion of the neutron chamber body.

9. The neutron generating device of claim 7, wherein the neutron chamber mount flange protrudes from the neutron chamber body in the transverse direction.

10. The neutron generating device of claim 9, wherein the neutron chamber further includes a first neutron chamber mount wall that extends from the neutron chamber body in the transverse direction, and
wherein the neutron chamber mount flange is coupled to the first neutron chamber mount wall.

11. The neutron generating device of claim 10, further comprising:
a second neutron chamber mount wall that extends from the neutron chamber body in the transverse direction and is located opposite the first neutron chamber mount wall; and
a neutron chamber mount wall cap which is coupled to the second neutron chamber mount wall and faces the first neutron chamber mount wall.

12. The neutron generating device of claim 11, wherein the target body is seated on the first neutron chamber mount wall and the second neutron chamber mount wall.

13. The neutron generating device of claim 1, further comprising:
a plurality of plasma generation units, each of which is the plasma generation unit, arranged in the transverse direction; and
a plasma chamber holder including a plasma chamber holder body, the plasma chamber holder body being coupled to the rear ends of the plurality of plasma generation units and coupled to a front end of the neutron chamber.

14. The neutron generating device of claim 13, wherein the plasma chamber holder includes a plurality of plasma chamber holder openings that penetrates the plasma chamber holder body forward and rearward, and
wherein the rear end of each of the plurality of plasma generation units is directed toward each of the plurality of plasma chamber holder openings.

15. The neutron generating device of claim 14, wherein the target unit includes a plurality of target electrodes, each of which is the target electrode, arranged in the transverse direction, and
wherein each of the plurality of target electrodes faces a corresponding one of the plurality of plasma generation units.

16. The neutron generating device of claim 14, wherein target electrode is elongated in the transverse direction.

17. The neutron generating device of claim 1, further comprising a beam bender connecting the plasma generation unit and the neutron chamber,
wherein the beam bender bends the ion beam and delivers the ion beam to the neutron chamber.

18. The neutron generating device of claim 17, wherein the beam bender includes:
a beam bender chamber; and
a beam bender magnet providing magnetic field lines to the beam bender chamber,
wherein the beam bender chamber includes:
a beam bender chamber incident flange coupled to the plasma generation unit;
a beam bender chamber extraction flange coupled to the neutron chamber; and
a beam bender chamber body that extends from the beam bender chamber incident flange in the longitudinal direction, bends in the transverse direction, and leads to the beam bender chamber extraction flange.

19. The neutron generating device of claim 18, wherein the longitudinal direction and the transverse direction form a horizontal plane, and
wherein the beam bender magnet provides the magnetic field lines passing through the horizontal plane to the beam bender chamber body.

20. The neutron generating device of claim 19, wherein an intensity of the magnetic field lines increases as the beam bender chamber body goes toward a bending direction.
